# DEMANDE DE BREVET EUROPEEN

(11) **EP 4 793 322 A1**
(43) Date de publication de la demande: **19.08.2026**
(21) Numéro de dépôt: 25157775.5
(22) Date de dépôt: 13.02.2025
(51) Int. Cl.: C09B 23/04, C09B 23/06, G01N 33/52

(54) **COMPOSÉS FLUORESCENTS ADN/ARN-DÉPENDANTS, ET UTILISATIONS**

(71) Demandeur: bioMérieux, 69280 Marcy l'Etoile (FR)
(72) Inventeur: LAURENT, Alain, 38100 GRENOBLE (FR); FORGET, Damien, 26260 MARGES (FR); CALLEJA, Justin, 38100 GRENOBLE (FR); BURR, Arnaud, 38950 SAINT MARTIN LE VINOUX (FR)
(74) Mandataire: bioMérieux PI Groupement mandataires

(57) **Abrégé**

L'invention concerne des marqueurs et colorants fluorescents ADN/ARN-dépendants de formule (I) : 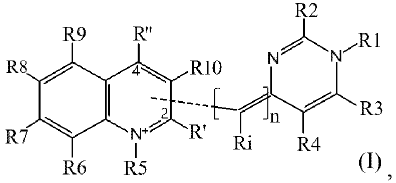 tels que définis dans la revendication 1. Ces composés dont la fluorescence apparaît ou est exaltée en interagissant avec des acides nucléiques (ADN et ARN) ont un intérêt particulier pour la détection, l'identification et l'analyse des acides nucléiques.

## Description

L'invention concerne le domaine des marqueurs et colorants d'acides nucléiques, plus particulièrement, celui des marqueurs et colorants fluorescents ADN/ARN-dépendants. Ces composés, dont la fluorescence apparaît ou est exaltée en interagissant avec des acides nucléiques (ADN et/ou ARN) sont des outils précieux pour la détection, l'identification et l'analyse des acides nucléiques. De tels composés continuent à susciter un intérêt croissant, tant pour la recherche fondamentale que pour la recherche appliquée, et trouvent de nombreuses applications, notamment dans les domaines de l'imagerie médicale et du diagnostic.

Par colorants d'acides nucléiques, l'invention vise aussi bien les "simples" marqueurs destinés à se fixer aux acides nucléiques (aussi bien doubles brins que simples brins), les intercalants, dont la structure chimique particulière leur permet de s'insérer et de se loger à l'intérieur même de la double hélice d'ADN, que les sondes nucléiques conjuguées.

Les colorants d'acides nucléiques ("simples" marqueurs, intercalants et sondes nucléiques) peuvent être classiquement utilisés pour détecter, identifier et/ou quantifier des acides nucléiques. Ils sont également utilisés pour suivre le déroulement de processus d'amplification de séquences nucléiques par PCR (« *Polymerase Chain Reaction* » ou réaction en chaîne par polymérase), par LCR (« *Ligase Chain Reaction* », ou réaction en chaîne par ligase), par NASBA (« *Nucleic Acid Sequence-BasedAmplification* », ou amplification basée sur la séquence des acides nucléiques), par TMA (« *Transcription Mediated-Amplification »,* ou amplification médiée par transcription), par LAMP (« *Loop-Mediated Isothermal Amplification* ») et/ou par SDA (« *Strand Displacement Amplification* », ou amplification par déplacement de brin). Dans des applications plus sophistiquées, ces colorants d'acides nucléiques sont utilisés pour détecter des mutations de l'ADN, des polymorphismes génétiques.

A titre d'exemples de colorants fluorescents d'acides nucléiques du type "simple" marqueur ou intercalant, plusieurs sont disponibles dans le commerce, tels que :
- le thiazole orange (CAS No. 107091-89-4) : 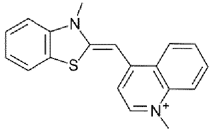
- le DAPI dye (CAS No. 28718-90-3) : 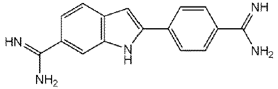
- le SYBR Green I (CAS No. 163795-75-3): 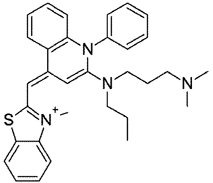
- le SYBR Green II (CAS No. 172827-25-7) : 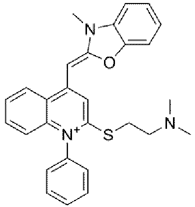
- le PicoGreen^{™} (CAS No. 123334-00-9) : 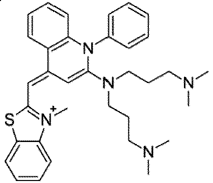
- l'Oxazole Blue (PO-PRO^{™}-1; CAS No. 57199-56-9) : 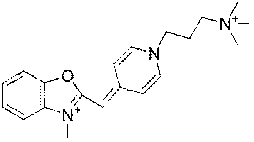
- l'Oxazole Yellow (YO-PRO^{®}-1 ; CAS No. 152068-09-2) : 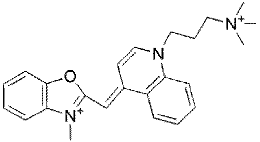
- le TO Iodide (TO-PRO^{®}-1 ; CAS No. 157199-59-2) : 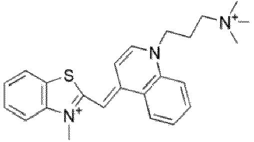
- l'Oxazole Red (YO-PRO^{®} 3 ; CAS No. 157199-62-7) : 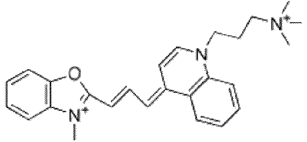
- le Thiazole Red (TO-PRO^{®} 3 ; CAS No. 157199-63-8) :

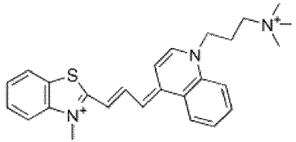

On peut aussi citer les composés notés D6 et N7, tels que décrits dans US 7,387,887 :

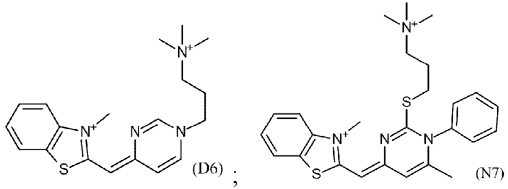

Il est relativement facile d'adapter la structure de ces différents colorants pour pouvoir les coupler de façon covalente à des oligonucléotides, et ainsi préparer des sondes nucléiques conjuguées.

Outre la stabilité structurelle des colorants, l'environnement chimique (par exemple le pH, la salinité, la polarité du solvant, sa constante diélectrique, son indice de réfraction...) peut influencer significativement leur comportement optique et leurs performances de fluorescence (spectre d'absorption, spectre d'émission, rendement quantique, durée de vie de la fluorescence). Selon l'utilisation qui en est faite, les colorants d'acides nucléiques peuvent être soumis à des compositions et des environnements très variés (par exemple, des échantillons biologiques -tels que sang total, plasma, urine, broyat de cellules... -, un milieu de culture, un hydrolysat et autres fractions cellulaires, un gel d'électrophorèse, un mélange réactionnel d'amplification de séquences nucléiques).

Les applications des colorants d'acides nucléiques étant nombreuses, variées et en perpétuelle évolution, pour répondre à cette dynamique, il est nécessaire d'enrichir davantage cette gamme de colorants, et de pouvoir ainsi proposer un panel de candidats avec un éventail de caractéristiques et propriétés physico-chimiques le plus large possible (longueur d'onde d'excitation, longueur d'onde d'émission, rendement quantique, affinités et force d'interaction avec les acides nucléiques, sensibilité de détection, stabilité chimique, stabilité thermique, solubilité et compatibilité à des conditions d'utilisation particulières, par exemple, de température, de pH, de solvant).

Dans ce contexte, l'invention propose des composés fluorescents ADN/ARN-dépendants de formule (I) : 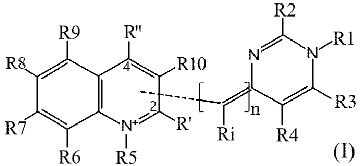 consistant en :
- un noyau pyrimidine lié en résonance à un noyau quinoléine, en position 2 ou 4 (dudit noyau quinoléine), via un groupement alcényle ; et
- un bras d'interaction apte à interagir de façon aspécifique avec un acide nucléique ou de façon spécifique avec une séquence nucléotidique donnée ;
et dans laquelle :
- R' ou R" désigne ainsi ledit noyau pyrimidine lié audit noyau quinoléine via ledit groupement alcényle, et lorsqu'il ne désigne pas ledit noyau pyrimidine, R' ou R" est alors choisi parmi ledit bras d'interaction, un atome d'hydrogène, un alkyle en C1-C6, un -S-alkyle en C1-C5, un -O-alkyle en C1-C5, un -NH-alkyle en C1-C5, un -N-(alkyle)₂ en C1-C5, un -C(O)NH-alkyle en C1-C5, un -C(O)O-alkyle en C1-C5, un -C(O)-alkyle en C1-C5 et un -NH-acyle en C1-C4 ;
- n est égal à 1, 2 ou 3 ;
- Ri est un atome d'hydrogène, un alkyle en C1-C6 ou un phényle ;
- R2, R3, R4, R6, R7, R8, R9 et R10 sont indépendamment choisis parmi ledit bras d'interaction, un atome d'hydrogène, un alkyle en C1-C6, un -S-alkyle en C1-C5, un -O-alkyle en C1-C5, un -NH-alkyle en C1-C5, un -N-(alkyle)₂ en C1-C5, un -C(O)NH-alkyle en C1-C5, un -C(O)O-alkyle en C1-C5, un -C(O)-alkyle en C1-C5 et un -NH-acyle en C1-C4 ;
- R1 et R5 sont indépendamment choisis entre ledit bras d'interaction, un groupe alkyle en C1-C6, un phényle, -(CH₂)ⱼ-O-alkyle en C1-C3, -(CH₂)ₖ-S-alkyle en C1-C3, -(CH₂)ₖ-C(O)NH-alkyle en C1-C3, un -C(O)O-alkyle en C1-C3 et un -C(O)-alkyle en C1-C3 ; avec j égal à 1, 2, 3 ;
et dans laquelle :
- lorsque R2, R3, R4, R6, R7, R8, R9, R10, R' ou R" désigne un bras d'interaction aspécifique, celui-ci est choisi parmi des chaînes hydrocarbonées protonées ou protonables de formule -A-(CH₂)ₖ₁-B-(CH₂)ₖ₂-(D)ₖ₄-(CH₂)ₖ₃-Y, dans laquelle :
   - A est choisi parmi -CH₂-, -O-, -S- et -C(O)NH- ;
   - B et D sont choisis indépendamment parmi -CH₂-, -O-, -NH-, -N⁺(Me)₂-, -N⁺(Et)₂- et 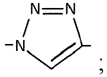
      - k1, k2 et k3 sont indépendamment choisis entre 0, 1 et 2 ; k4 est égal à 0 ou 1 ; et
      - Y est choisi parmi un trialkylammonium en C1-C5, le guanidinium, l'amidinium, un
   - NH-alkyle en C1-C5, et un -N-(alkyle)₂ en C1-C5 ; ou
- lorsque R2, R3, R4, R6, R7, R8, R9, R10, R' ou R" désigne le bras d'interaction spécifique à une séquence nucléotidique donnée, celui-ci est choisi parmi des chaînes hydrocarbonées de formule -A-(CH₂)ₖ₁-B-(CH₂)ₖ₂-(D)ₖ₄-(CH₂)ₖ₃-Y'-Nt, dans laquelle :
   - Nt est un oligonucléotide ;
   - A est choisi parmi -CH₂-, -O-, -S- et -C(O)NH- ;
   - B' et D' sont choisis indépendamment parmi -CH₂-, -O- et 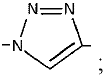
   - k1, k2 et k3 sont indépendamment choisis entre 0, 1 et 2 ; k4 est égal à 0 ou 1 ; et
   - Y' est une liaison covalente liant ledit oligonucléotide Nt au reste de la chaîne hydrocarbonée ; ou
- lorsque R1 ou R5 désigne un bras d'interaction aspécifique, celui-ci est choisi parmi des chaînes hydrocarbonées protonées ou protonables de formule -(CH₂)ₖ₁-B-(CH₂)ₖ₂-(D)ₖ₄-(CH₂)ₖ₃-Y, dans laquelle :
   - B et D sont choisis indépendamment parmi -CH₂-, -O-, -NH-, -N⁺(Me)₂-, -N⁺(Et)₂- et 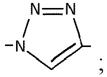
   - k1, k2 et k3 sont indépendamment choisis entre 0, 1 et 2 ; k4 est égal à 0 ou 1 ; et
   - Y est choisi parmi un trialkylammonium en C1-C5, le guanidinium, l'amidinium, un

   - NH-alkyle en C1-C5, et un -N-(alkyle)₂ en C1-C5 ; ou
- lorsque R1 ou R5 désigne un bras d'interaction spécifique à une séquence nucléotidique donnée, celui-ci est choisi parmi des chaînes hydrocarbonées de formule -(CH₂)ₖ₁-B-(CH₂)ₖ₂-(D)ₖ₄-(CH₂)ₖ₃-Y'-Nt, dans laquelle :
   - Nt est un oligonucléotide ;
   - B' et D' sont choisis indépendamment parmi -CH₂-, -O- et 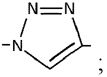
   - k1, k2 et k3 sont indépendamment choisis entre 0, 1 et 2 ; k4 est égal à 0 ou 1 ; et
   - Y' est une liaison covalente liant ledit oligonucléotide Nt au reste de la chaîne hydrocarbonée.

Les composés de formule (I) selon l'invention se présentent sous forme de sels, combinés à un contre ion, en l'occurrence un anion. Cet anion est avantageusement choisi parmi les anions halogénés (préférentiellement, Cl⁻, Br⁻ et I⁻), le trifluoroacétate, l'acétate, le formiate, les sulfonates (tels que le méthylsulfonate, le trifluorométhylsulfonate et le tosylate), les sulfates (tels que le méthylsulfate), le phosphate, le pyrophosphate et le triphosphate.

Les sels de trifluoroacétate sont préférés.

Également, il est bien entendu que, de manière générale, les composés selon l'invention et leurs sels, tels que décrits dans le présent document, peuvent contenir un ou plusieurs centres chiraux. Dans ces cas, tous les stéréoisomères sont considérés comme inclus dans la description de ces composés. Ces stéréoisomères comprennent les énantiomères purs, les mélanges d'énantiomères, les diastéréoisomères purs et les mélanges de diastéréoisomères.

Selon un premier mode particulier de réalisation, les composés selon l'invention se caractérisent en ce que le noyau pyrimidine se trouve lié au carbone 2 du noyau quinoléine. Selon ce premier mode particulier de réalisation, les composés selon l'invention répondent à la formule (Ia) : 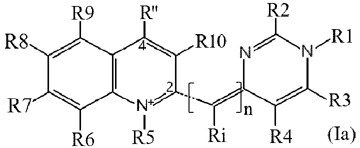 dans laquelle R1, R2, R3, R4, R5, R6, R7, R8, R9, R10, R", Ri et n sont tels que précédemment définis.

En alternative à ce premier mode particulier de réalisation, les composés selon l'invention se caractérisent en ce que le noyau pyrimidine se trouve lié au carbone 4 du noyau quinoléine. Selon ce deuxième mode particulier de réalisation, les composés selon l'invention répondent à la formule (Ib) : 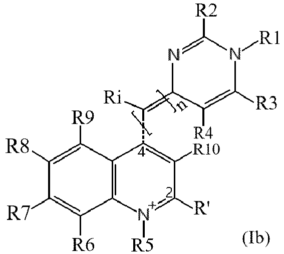 dans laquelle R1, R2, R3, R4, R5, R6, R7, R8, R9, R10, R', Ri et n sont tels que précédemment définis.

Les composés de l'invention sont ainsi des colorants ou marqueurs fluorescents qui ont la capacité de se lier de façon réversible aux acides nucléiques. Cette liaison peut être spécifique ou non-spécifique, selon que le composé comprend un bras d'interaction couplé à un oligonucléotide ou un bras d'interaction porteur d'un groupement protoné ou protonable (c'est-à-dire qui se trouve protoné, au moins dans les conditions normales d'utilisation).

Les composés porteurs d'oligonucléotides correspondent à des sondes nucléiques conjuguées, classiquement destinées à être utilisées pour la détection, l'identification et/ou le dosage de séquences nucléotidiques cibles éventuellement présentes dans un échantillon. Lorsqu'une telle sonde nucléique est introduite dans une solution contenant une séquence nucléotidique cible, elle se lie à cette séquence par hybridation. Cette hybridation repose sur les règles de complémentarité des bases nucléotidiques ; les bases de la sonde s'apparient spécifiquement aux bases complémentaires de la séquence cible, grâce à des liaisons hydrogène et des forces de Van der Waals.

En revanche, les composés de l'invention qui ne portent pas un oligonucléotide mais un bras d'interaction aspécifique, sont considérés comme de simples marqueurs. Ceux-ci peuvent éventuellement posséder la capacité de pouvoir s'insérer dans la double hélice de l'ADN. Leur capacité d'interaction avec les acides nucléiques, simples brins ou doubles brins, est essentiellement de nature électrostatique. Cette interaction fait intervenir, d'une part, le squelette phosphate des acides nucléiques et, d'autre part, les groupements protonés des bras d'interaction.

Qu'elle soit spécifique (hybridation) ou aspécifique (interaction électrostatique), l'interaction entre les bras d'interaction des composés selon l'invention et les séquences nucléiques conduit à un rapprochement étroit de la structure de résonance des composés de l'invention et les bases azotées des acides nucléiques. La structure de résonance des composés de l'invention se trouve alors stabilisée dans une configuration de haut niveau de résonance, protégée de collisions non radiatives en provenance du milieu. Ceci a pour effet d'accroitre significativement le rendement quantique de la structure de résonance des composés de l'invention.

Les composés selon l'invention se distinguent des colorants de l'état de l'art, principalement par une structure de résonance unique, qui combine un noyau pyrimidine et un noyau quinoléine. Cette structure de résonance donne lieu à un nouvel éventail de propriétés physico-chimiques (spectre d'absorption, spectre d'émission, rendement quantique, durée de vie de la fluorescence...), ainsi qu'à une grande modularité. Selon la position de fixation du noyau pyrimidine sur le noyau quinoléine (en R' ou R"), selon la nature et la longueur des chaînes latérales (c'est-à-dire R1-R10, R' et R") et celles du segment alcényle (en partie défini par Ri et n) raccordant les deux noyaux aromatiques, selon la position du bras d'interaction, les composés fluorescents résultants peuvent présenter des caractéristiques et des propriétés physico-chimiques distinctes, qui peuvent varier plus ou moins grandement, d'un composé selon l'invention à l'autre.

L'invention offre ainsi une nouvelle gamme de composés fluorescents se caractérisant par une structure de résonance particulière et des capacités physico-chimiques singulières associées, appréciées isolément ou en combinaison, choisies parmi :
- une longueur d'onde d'excitation/absorption particulière comprise entre 440 et 700 nm (celle-ci pouvant varier, par exemple, en fonction de la longueur du groupement alcényle (c'est-à-dire n) et de la nature des substituants des composés selon l'invention) ;
- une longueur d'onde d'émission particulière comprise entre 490 et 750 nm (celle-ci pouvant varier, par exemple, selon la longueur du groupement alcényle (c'est-à-dire n) et selon la nature des substituants des composés selon l'invention) ;
- un déplacement de Stokes égal ou supérieur à 10 nm ;
- une température de dissociation à l'ADN, notamment double brin, comprise généralement entre 60 et 85°C, pour un pH de l'ordre de 8 ;
- une stabilité d'interaction aspécifique avec les acides nucléiques, en particulier doubles brins comprise entre 25 et 65°C (dans les conditions classiques d'une PCR) ;
- un niveau de fluorescence résiduelle relativement faible (en absence d'interaction avec un acide nucléique et sous exposition à une onde d'excitation appropriée) et/ou sensible à des composés bloqueurs de fluorescence ;
- une exaltation de fluorescence en présence d'un double brin d'ADN comprise entre 2 et 7 (pour les composés à interaction non spécifique) et de 1,5 à 5 (pour les composés à interaction spécifique).

Ainsi, un premier aspect de l'invention porte sur des composés fluorescents ADN/ARN-dépendants de formule (I) -plus spécifiquement de formules (Ia) ou (Ib)-destinés à une utilisation comme "simples" marqueurs, avec éventuellement la capacité de venir s'intercaler dans la double hélice d'un ADN double brin. Selon ce premier aspect, les composés fluorescents selon l'invention se caractérisent par une structure de résonance propre à l'invention, et comportent un bras d'interaction aspécifique.

Avantageusement et selon l'invention, ledit bras d'interaction aspécifique correspond à R1 ou R2, plus préférentiellement R2.

Avantageusement et selon l'invention, ce bras d'interaction aspécifique est choisi parmi : -(CH₂)₂-₅-Y, -S-(CH₂)₂-₅-Y, -(CH₂)₂-₅-Y, 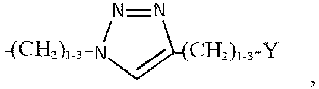 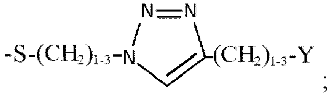 Y étant tel que précédemment défini.

Lorsque R2 désigne ledit bras d'interaction aspécifique, avantageusement et selon l'invention :
- R' ou R" désigne ledit noyau pyrimidine lié audit noyau quinoléine via un groupement alcényle ; lorsqu'il ne désigne pas ledit noyau pyrimidine, R' est un atome d'hydrogène et R" est choisi parmi un atome d'hydrogène et un alkyle en C1-C6 (tel qu'un méthyle ou un éthyle) ;
- n est égal à 1 ou 2 ;
- R1 est un phényle ;
- R5 est choisi parmi un phényle et un alkyle en C1-C5 (tel qu'un méthyle ou un éthyle) ;
- R7 désigne un atome d'hydrogène ou un -NH-acyle en C1-C4 (préférentiellement un -NH-acétyle) ; et
- Ri, R3, R4, R6, R8, R9 et R10 sont des atomes d'hydrogène.

En alternative, lorsque R1 désigne ledit bras d'interaction aspécifique, avantageusement et selon l'invention :
- R' désigne ledit noyau pyrimidine lié audit noyau quinoléine via un groupement alcényle ;
- n est égal à 1 ou 2 ;
- R5 désigne un alkyle en C1-C5 ;
- Ri, R", R2, R3, R4, R6, R7, R8, R9 et R10 sont des atomes d'hydrogène.

A titre d'exemples, les marqueurs suivants ont été développés selon ce premier aspect de l'invention :

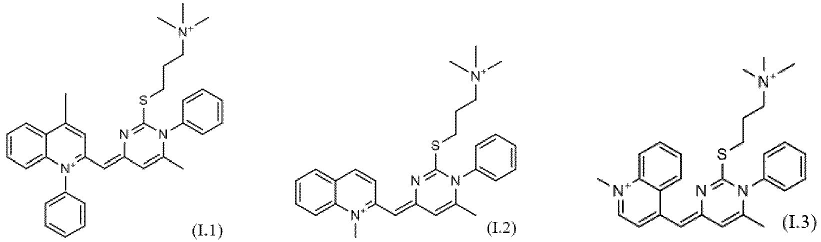

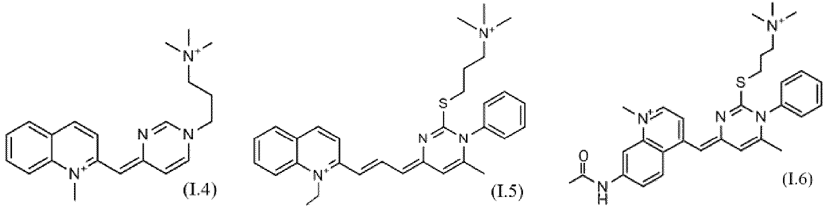

Ces marqueurs sont préparés sous forme de sels. Le contre ion est avantageusement choisi parmi les anions halogénés (préférentiellement, Cl-, Br- et I-), le trifluoroacétate, l'acétate, le formiate, les sulfonates (tels que le méthylsulfonate, le trifluorométhylsulfonate et le tosylate), les sulfates (tels que le méthylsulfate), le phosphate, le pyrophosphate et le triphosphate. Le trifluoroacétate est préféré.

Un deuxième aspect de l'invention porte sur des composés fluorescents ADN/ARN dépendants de formule (I) -plus spécifiquement de formules (Ia) ou (Ib)- qui correspondent à des sondes nucléiques conjuguées à des structures de résonance propres à l'invention. De tels composés selon l'invention consistent alors en des oligonucléotides sur lesquels se trouvent couplés, de façon covalente, une ou plusieurs structures de résonance propres à l'invention, à savoir une/des structure(s) de résonance composée(s) d'un noyau pyrimidine relié en résonance, par l'intermédiaire d'un groupement alcényle, à un noyau quinoléine. Également, le couplage d'une structure de résonance selon l'invention sur un oligonucléotide d'intérêt (Nt) est réalisé par l'intermédiaire d'une chaîne hydrocarbonée de formule -A-(CH₂)ₖ₁-B'-(CH₂)ₖ₂-(D')ₖ₄-(CH₂)ₖ₃-Y'- ou -(CH₂)ₖ₁-B'-(CH₂)ₖ₂-(D')ₖ₄-(CH₂)ₖ₃-Y'-.

Selon un mode de réalisation préféré, ledit bras d'interaction spécifique correspond à R1 ou R2, plus préférentiellement à R2.

Lorsque R2 désigne ledit bras d'interaction spécifique, avantageusement et selon l'invention :
- R' ou R" désigne ledit noyau pyrimidine lié audit noyau quinoléine via un groupement alcényle ; lorsqu'il ne désigne pas ledit noyau pyrimidine, R' est un atome d'hydrogène et R" est choisi parmi un atome d'hydrogène et un alkyle en C1-C6 (de préférence, le méthyle ou l'éthyle) ;
- n est égal à 1 ou 2 ;
- R1 est un phényle ;
- R5 est choisi parmi un phényle et un alkyle en C1-C5 (de préférence, le méthyle ou l'éthyle) ; et
- Ri, R3, R4, R6, R7, R8, R9 et R10 sont des atomes d'hydrogène.

Le terme « oligonucléotide » tel qu'il est utilisé dans le présent document fait référence à un fragment d'ADN ou d'ARN, simple brin, composé de quelques dizaines de nucléotides (notamment de 5-mers à 100-mers, de préférence de 10-mers à 30-mers).

Au sens de la présente invention, un oligonucléotide peut naturellement porter des groupes réactifs (tels que des groupements hydroxyle, phosphate, amine) ou avoir été modifié pour y greffer des groupes réactifs supplémentaires (par exemple des groupements thioester, maléimide, alcynyle, azido), par exemple à des fins de fonctionnalisation et/ou de couplage chimique ultérieurs. Au sens de la présente invention, un oligonucléotide peut également être assemblé à partir de nucléotides naturels et, éventuellement, incorporer un ou plusieurs nucléotides préalablement modifiés ou synthétiques (par exemple, des nucléosides 2'OMe, 2'Fluoro, LNA, PNA...) et peut être modifié/fonctionnalisé, par exemple pour faciliter d'éventuelles réactions de greffage/couplages ultérieures.

Par l'intermédiaire de groupes réactifs présents sur les nucléotides (naturels ou synthétiques) et grâce à des réactions chimiques de mise en oeuvre relativement simple et bien connue de l'état de l'art, des composés d'intérêt (par exemple, une structure de résonance selon l'invention ou d'autres marqueurs connus de l'état de l'art), eux-mêmes porteurs de groupes réactifs appropriés, peuvent être couplés covalemment (le terme existe bien d'après reverso) à l'oligonucléotide.

Dans une sonde nucléique conjuguée selon l'invention, Y' désigne une liaison covalente reliant un oligonucléotide d'intérêt (Nt) au reste du bras d'interaction spécifique. Avantageusement et selon l'invention, Y' est une liaison covalente choisie parmi :
- une liaison carboxamide (qui peut être formée par une réaction de couplage entre un ester activé et une amine),
- une liaison thioéther (formée entre un maléimide et un thiol),
- une liaison alcane (entre un alcène et un diène),
- une liaison oxime (entre un aldéhyde ou une cétone et une hydroxylamine),
- une liaison 1,2,3-triazole (entre un azide et un alcyne), et
- une liaison ester de boronate (entre un boronate et un glycol).

Avantageusement et selon l'invention, ledit bras d'interaction spécifique est choisi parmi : -(CH₂)₂₋₅-Y'-Nt, -S-(CH₂)₂₋₅-Y'-Nt, -(CHz)z-s-Y'-Nt, 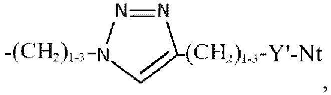 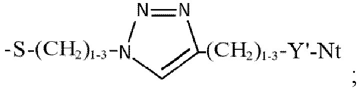 Y' et Nt étant tels que précédemment définis.

Optionnellement, dans une sonde nucléique conjuguée selon l'invention, l'oligonucléotide peut être couplé à d'autres composés qu'une structure de résonance selon l'invention, par exemple d'autres colorants fluorescents, et/ou des composés bloqueurs de fluorescence (ou *"quencher"),* et/ou des composés aptes à bloquer la progression d'une polymérase le long de l'oligonucléotide.

Selon un troisième aspect de l'invention, qui est étroitement lié au deuxième aspect tel que précédemment décrit, l'invention propose des composés fluorescents, du type précurseur de synthèse utile à la préparation de sondes nucléiques conjuguées selon l'invention. Ces composés précurseurs de synthèse, qui se caractérisent par une structure de résonance propre à l'invention, ont été conçus pour pouvoir lié, de façon covalente, une structure de résonance selon l'invention à des oligonucléotides, au moyen d'une réaction chimique de couplage dont la mise en oeuvre se veut relativement simple et bien connue d'une personne du métier.

Ainsi, selon ce troisième aspect, l'invention propose des précurseurs de synthèse de formule (II) : 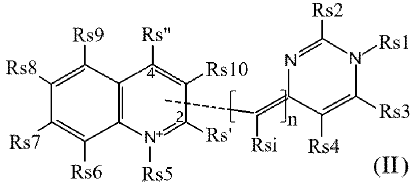 consistant en :
- un noyau pyrimidine lié en résonance à un noyau quinoléine, en position 2 ou 4 (dudit noyau quinoléine), via un groupement alcényle ; et
- un bras de couplage apte former une liaison covalente avec un oligonucléotide ;
et dans laquelle :
- Rs' ou Rs" désigne ainsi ledit noyau pyrimidine lié audit noyau quinoléine via un groupement alcényle ; et lorsqu'il ne désigne pas ledit noyau pyrimidine, Rs' ou Rs" est alors choisi parmi ledit bras de couplage, un atome d'hydrogène, un alkyle en C1-C6, un -S-alkyle en C1-C5, un -O-alkyle en C1-C5, un -NH-alkyle en C1-C5, un -N-(alkyle)₂ en C1-C5, un -C(O)NH-alkyle en C1-C5, un -C(O)O-alkyle en C1-C5, un -C(O)-alkyle en C1-C5 et un
- NH-acyle en C1-C4 ;
   - n est égal à 1, 2 ou 3 ;
   - Rsi est un atome d'hydrogène, un alkyle en C1-C6 ou un phényle ;
   - Rs2, Rs3, Rs4, Rs6, Rs7, Rs8, Rs9 et Rs10 sont indépendamment choisis parmi ledit bras de couplage, un atome d'hydrogène, un alkyle en C1-C6, un -S-alkyle en C1-C5, un -O-alkyle en C1-C5, un -NH-alkyle en C1-C5, un -N-(alkyle)₂ en C1-C5, un -C(O)NH-alkyle en C1-C5, un -C(O)O-alkyle en C1-C5, un -C(O)-alkyle en C1-C5 et un -NH-acyle en C1-C4 ; et
   - Rs1 et Rs5 sont indépendamment choisis entre ledit bras de couplage, un groupe alkyle en C1-C6, un phényle, -(CH₂)ⱼ-O-alkyle en C1-C3, -(CH₂)ₖ-S-alkyle en C1-C3, -(CH₂)ₖ-C(O)NH-alkyle en C1-C3, un -C(O)O-alkyle en C1-C3 et un -C(O)-alkyle en C1-C3 ; avec j égal à 1, 2, 3 ;
   et dans laquelle :
   - lorsque Rs2, Rs3, Rs4, Rs6, Rs7, Rs8, Rs9, Rs10, Rs' ou Rs" désigne ledit bras de couplage, celui-ci est choisi parmi des chaînes hydrocarbonées de formule -A-(CH₂)ₖ₁-B'-(CH₂)ₖ₂-(D')ₖ₄-(CH₂)ₖ₃-Y", dans laquelle :
      - A est choisi parmi -CH₂-, -O-, -S- et -C(O)NH- ;
      - B' et D' sont choisis indépendamment parmi -CH₂-, -O- et 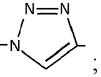
      - k1 et k2 sont choisis indépendamment entre 1, 2 et 3 ;
      - k1, k2 et k3 sont indépendamment choisis entre 0, 1 et 2 ; k4 est égal à 0 ou 1 ; et
      - Y" est un groupement réactif apte générer une liaison covalente par réaction avec un groupe réactif porté par un oligonucléotide ; ou
   - lorsque Rs1 ou Rs5 désigne ledit bras de couplage, celui-ci est choisi parmi des chaînes hydrocarbonées de formule -(CH₂)ₖ₁-B'-(CH₂)ₖ₂-(D')ₖ₄-(CH₂)ₖ₃-Y", dans laquelle :
      - B' et D' sont choisis indépendamment parmi -CH₂-, -O-, -S- et 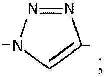
      - k1 et k2 sont choisis indépendamment entre 1, 2 et 3 ;
      - k3 est choisi entre 0, 1, 2 et 3 ; et
      - Y" est un groupement réactif apte générer une liaison covalente par réaction avec un groupe réactif porté par un oligonucléotide.

Les précurseurs de formule (II) selon l'invention se présentent sous forme de sels, combinés à un contre ion, en l'occurrence un anion. Cet anion est avantageusement choisi parmi les anions halogénés (préférentiellement, Cl⁻, Br⁻ et I⁻), le trifluoroacétate, l'acétate, le formiate, les sulfonates (tels que le méthylsulfonate, le trifluorométhylsulfonate et le tosylate), les sulfates (tels que le méthylsulfate), le phosphate, le pyrophosphate et le triphosphate. Les sels de trifluoroacétate sont préférés.

Selon un premier mode particulier de réalisation d'un précurseur selon l'invention, ce dernier est caractérisé en ce que le noyau pyrimidine se trouve lié au carbone 2 du noyau quinoléine ; il répond alors à la formule (IIa) : 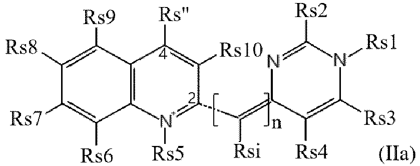 dans laquelle Rs1, Rs2, Rs3, Rs4, Rs5, Rs6, Rs7, Rs8, Rs9, Rs10, Rs", Rsi et n sont tels que précédemment définis.

En alternative à ce premier mode particulier de réalisation d'un précurseur selon l'invention, les précurseurs selon l'invention se caractérisent en ce que le noyau pyrimidine se trouve lié au carbone 4 du noyau quinoléine. Selon ce deuxième mode particulier de réalisation, les précurseurs selon l'invention répondent à la formule (IIb) : 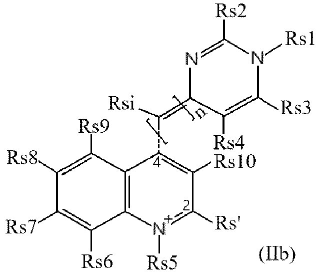 dans laquelle, Rs1, Rs2, Rs3, Rs4, Rs5, Rs6, Rs7, Rs8, Rs9, Rs10, Rs', Rsi et n sont tels que précédemment définis.

Que les précurseurs de l'invention soient de formule (Iia) ou (IIb), ledit bras de couplage correspond avantageusement à Rs1 ou Rs2, plus préférentiellement à Rs2. Lorsque Rs2 désigne ledit bras de couplage, Rs1 désigne avantageusement un atome d'hydrogène, un méthyle, un éthyle ou un phényle (éventuellement substitué), de préférence un phényle.

Avantageusement et selon l'invention, ledit bras de couplage est choisi parmi : -(CH₂)₂₋₅-Y", -S-(CH₂)₂₋₅-Y", -(CH₂)₂₋₅-Y", 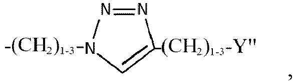 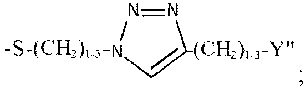 Y" étant tel que précédemment défini.

Avantageusement et selon l'invention, Y" est un groupement réactif choisi parmi :
- un maléimide, susceptible de former une liaison thioéther par réaction avec un thiol ;
- un thiol, susceptible de former une liaison thioéther par réaction avec un maléimide ;
- un alcène, susceptible de former une liaison alcane par réaction avec un diène ;
- un diène, susceptible de former une liaison alcane par réaction avec un alcène ;
- un aldéhyde, susceptible de former une liaison oxime par réaction avec une hydroxylamine ;
- une cétone, susceptible de former une liaison oxime par réaction avec une hydroxylamine ;
- une hydroxylamine, susceptible de former une liaison oxime par réaction avec un aldéhyde ou une cétone ;
- un azide, susceptible de former une liaison 1,2,3-triazole par réaction avec un alcyne ;
- un alcyle, susceptible de former une liaison 1,2,3-triazole par réaction avec un azide ;
- un boronate, susceptible de former une liaison ester de boronate par réaction avec un glycol ; et
- un glycol, susceptible de former une liaison ester de boronate par réaction avec un boronate.

A titre d'exemples, les précurseurs de synthèse selon l'invention sont préférentiellement choisis parmi :

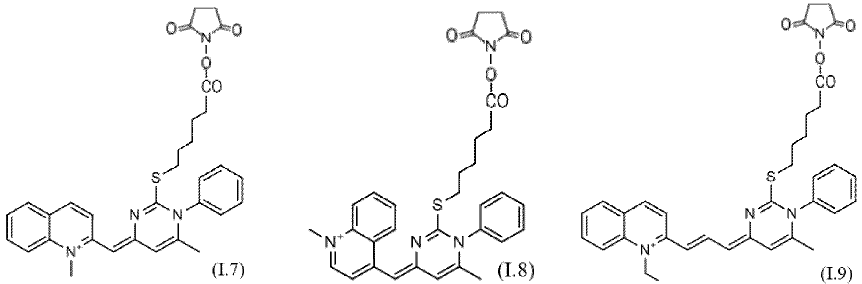

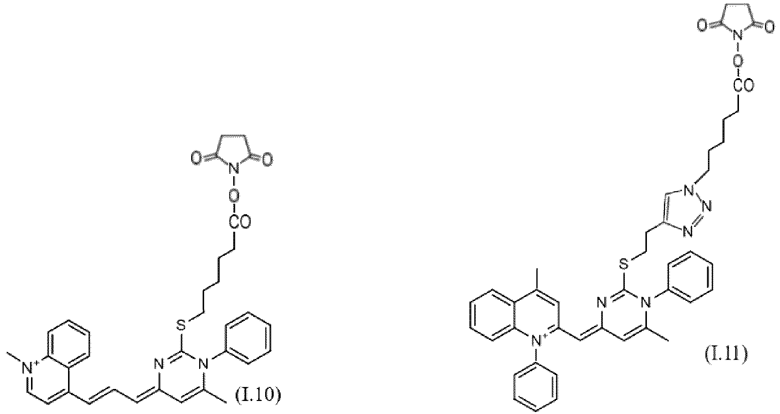

D'autres buts, caractéristiques et avantages de l'invention apparaîtront au vu de la description détaillée qui va suivre, et des exemples développés ci-après en relation avec les figures annexées, dans lesquelles :
- la Figure 1 présente un exemple de voie de synthèse de dérivés de pyrimidinium utilisables comme composés intermédiaires pour la préparation de marqueurs fluorescents selon l'invention (Exemple I.1.a),
- les Figures 2 et 3 proposent deux voies de synthèse de marqueurs fluorescents selon l'invention, en fonction de la longueur du segment alcényle (n = 1 ou 2) qui lie les noyaux pyrimidine et quinoléine (Exemples I.1.b à I.1.e),
- les Figures 4 et 5 présentent, sous forme graphique, quelques propriétés de fluorescence intéressantes des marqueurs exemplifiés (Exemple I.2.a),
- les Figures 6a à 6f regroupent les courbes de fusion (A) et les tracés de leurs dérivées premières (B), illustrant la dénaturation d'un ADN double brin de 80-mers, en présence de marqueurs selon l'invention ou de marqueurs de l'état de l'art (Exemple I.2.b),
- les Figures 7 et 8 schématisent deux voies de synthèse de précurseurs de synthèse selon l'invention, utilisables pour la préparation de sondes nucléiques conjuguées selon l'invention, en fonction de la longueur du segment alcényle (n = 1 ou 2) qui lie les noyaux pyrimidine et quinoléine (Exemples II.1.a et II.1.b),
- la Figure 9 présente de manière schématique un protocole de préparation d'une sonde nucléique conjuguée selon l'invention, par couplage d'un précurseur fluorescent à un oligonucléotide ;
- la Figure 10 présente les spectres d'excitation (A) et d'émission (B) des sondes fluorogènes triplement marquées selon l'invention, mesurées à 10 µM dans un mélange de PCR 1X à pH 8,5 (spectrofluorimètre Técan) (Exemple II.2.a) ;
- les Figures 11a à 11e regroupent les courbes de fusion (A) et les tracés de leurs dérivées premières (B), correspondant à l'analyse de duplex formés par hybridation de sondes nucléiques conjuguées, triplement marquées, avec un brin d'ADN complémentaire (COMP.) ou un brin d'ADN quasi-complémentaire (MISMATCH) (Exemple II.2.b) ;
- la Figure 12 présente les courbes de fusion (A) et les tracés des dérivées premières correspondantes (B), obtenus dans l'analyse de duplex formés par hybridation des sondes sI.11 et sN7 et un ADN cible (Exemples II.2.d) ;
- la Figure 13 illustre de manière schématique le principe général d'une détection d'un ADN cible au moyen de paires de sondes d'hybridation adjacentes, par effet FRET (Exemple II.2.e) ;
- la Figure 14 rend compte de performances de détection d'ADN cibles par des couples de sondes nucléiques d'hybridation adjacentes selon l'invention, par effet FRET (Exemple II.2.e) ;
- la Figure 15, sous forme d'histogrammes, rend compte de l'exaltation de fluorescence émise par les colorants accepteurs, LcRed640^{®} et Atto590^{®}, sous excitation de chaque colorant donneur testé (Exemple II.2.f).

La description et les exemples développés ci-après ont pour but de faciliter la compréhension de l'invention, sa mise en oeuvre et son utilisation. Ces exemples sont donnés à titre explicatif et ne sauraient limiter la portée de l'invention.

### EXEMPLES

### I. Simples marqueurs selon l'invention

Le Tableau 1 ci-après présente quelques exemples de réalisation de composés selon l'invention, en l'occurrence des composés faisant office de marqueurs d'acides nucléiques répondant à la formule I, et plus spécifiquement à la formule (Ia) ou (Ib) selon l'invention :

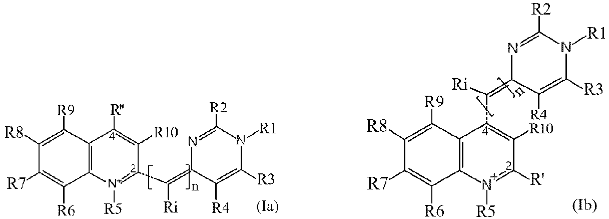

**Tableau 1**

| Marqueur | Form. Ia/Ib | n | R1 | R2 | R3 | R4 | R5 | R6-R10, Ri, R'/R" |
|---|---|---|---|---|---|---|---|---|
| I.1 | Ia | 1 | Ph | -S-(CH₂)₃-N⁺(Me)₃ | Me | H | Ph | R6-R10, Ri = H R" = Me |
| I.2 | Ia | 1 | Ph | -S-(CH₂)₃-N⁺Me)₃ | Me | H | Me | R6-R10, Ri, R" = H |
| I.3 | Ib | 1 | Ph | -S-(CH₂)₃-N⁺(Me)₃ | Me | H | Me | R6-R10, Ri, R' = H |
| I.4 | Ia | 1 | -(CH₂)₃-N⁺(Me)₃ | H | H | H | Me | R6-R10, Ri, R" = H |
| I.5 | Ia | 2 | Ph | -S-(CH₂)₃-N⁺(Me)₃ | Me | H | Et | R6-R10, Ri, R" = H |
| I.6 | Ib | 1 | Ph | -S-(CH₂)₃-N⁺(Me)₃ | Me | H | Me | R6, R8-R10, Ri, R" = H R7 = -NH-acétyle |

Outre leur capacité d'interaction avec l'ADN, les marqueurs fluorescents selon l'invention possèdent éventuellement la capacité de s'intercaler dans la double hélice d'un ADN).

Chaque composé synthétisé a été analysé par chromatographie à ultra haute pression couplée à la spectrométrie de masse UPLC-MS (Waters Corp., Etats-Unis). Les analyses ont été réalisées selon une méthode UPLC analytique utilisant : 0 à 95 % d'acétonitrile (ACN) dans de l'acétate de triéthylammonium (TEAAc) 10 mM pH 7 ou du TFA 10 mM pH 2 ou du formiate d'ammonium 10 mM pH 7 pendant 5 minutes à 0,5 mL/min sur une colonne BEH C18 (Waters Corp., Etats-Unis). La détection UV « *PDA max plot* » est utilisée.

### I.1. Synthèse de marqueurs fluorescents selon l'invention

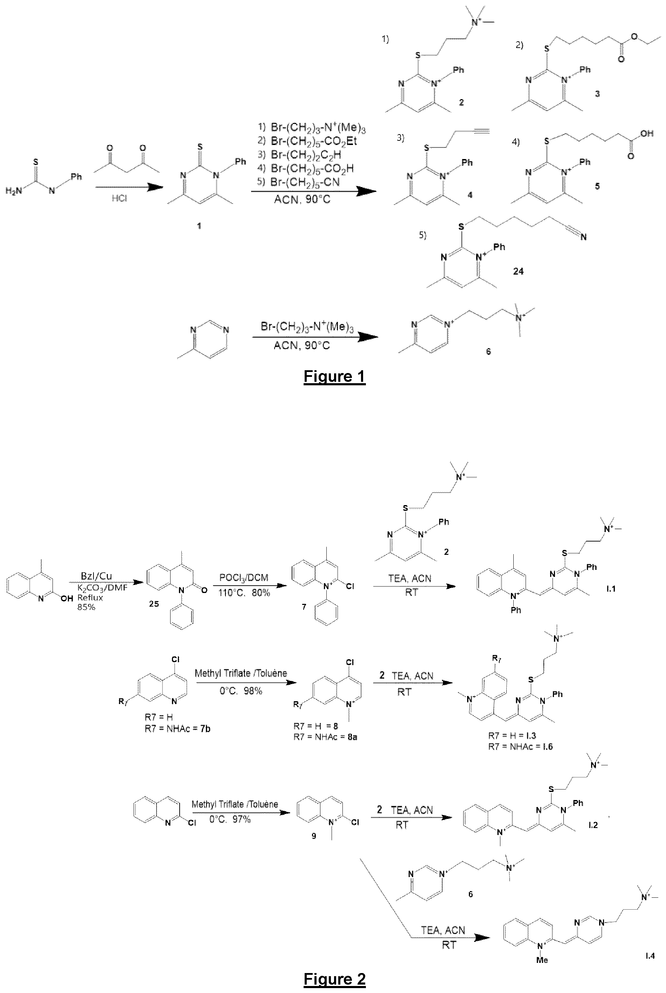

### I.1.a. Synthèse de dérivés pyrimidinium, utilisables comme composés intermédiaires dans la préparation de marqueurs selon l'invention (cf. Figure 1)

1/ 4,6-dimethyl-1-phénylpyrimidine-2(1H)-thione (1) 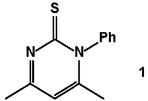
   m/z = 216,07
   *¹H RMN (400 MHz, D2O) δ (ppm): 7,49(t, IH) ; 7,43(t,2H) ;*
   *7,26(d,2H) ; 5,99(s, IH) ; 2,15(s,3H) ; 2,13(s,3H).*
   De la N-phénylthiourée (9,6 g ; 63,16 mmol) a été mise dans un ballon rond de 250 mL et dissoute dans 130 mL d'éthanol (EtOH). De l'acétylacétone (2,4-pentanedione) a été ajoutée, puis du HCl 37 % (15 mL). Le mélange a été agité et chauffé à 90°C (reflux) pendant 5 heures. Le mélange est devenu orange-rouge. Le chauffage a été arrêté et le mélange a été refroidi à température ambiante. 180 mL d'éther diéthylique ont été ajoutés pour précipiter le produit. Le précipité a été filtré et lavé deux fois avec de l'éther diéthylique. Ensuite, le précipité a été neutralisé dans un erlenmeyer de 500 mL avec une solution aqueuse de NaOH (150 mL, 8,18 g ; 180 mmol) et 80 mL d'EtOH ont été ajoutés. La solution a été versée dans une ampoule à décanter de 1 L et 200 mL de dichlorométhane (DCM) ont été ajoutés. L'ampoule à décanter a été secouée vigoureusement pendant quelques secondes. Après quelques minutes, la phase organique a été récupérée. La phase aqueuse a été lavée deux fois avec 50 mL de DCM. La phase organique a été évaporée à l'aide d'un évaporateur rotatif.
2/ Bromure de 2-((5-carboxypentyl)thio)-4,6-diméthyl-1-phénylpyrimidin-1-ium (5) 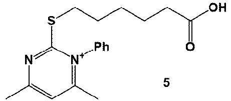 m/z = 331,1
   Le composé (1) (1,5 g ; 6,9 mmol) a été mis dans un ballon rond de 250 mL avec de l'acide 6-bromohexanoïque (2,029 g ; 10,4 mmol) et 100 mL d'acétonitrile. Le mélange a été agité et chauffé à 92°C pendant 2 heures. Le chauffage a été arrêté et le mélange a été refroidi à température ambiante, puis le produit brut a été évaporé à l'aide d'un évaporateur rotatif. Le résidu a été extrait dans un mélange de DCM/eau et le produit a été récupéré dans la phase aqueuse. Le solvant a été évaporé et une co-évaporation a été effectuée 2 fois avec de l'ACN à l'aide d'un évaporateur rotatif, pour obtenir le composé (5), avec un rendement de 100 %.
3/ Bromure de 4,6-diméthyl-1-phenyl-2-((3-(triméthylammonio)propyl)thio)pyrimidin-1-ium (2) ; bromure de 2-((6-ethoxy-6-oxohexyl)thio)-4,6-diméthyl-1-phénylpyrimidin-1-ium (3) ; bromure de 2-(but-3-yn-1-ylthio)-4,6-diméthyl-1-phénylpyrimidin-1-ium (4) ; bromure de 2-((5-cyanopentyl)thio)-4,6-diméthyl-1-phénylpyrimidin-1-ium (24) 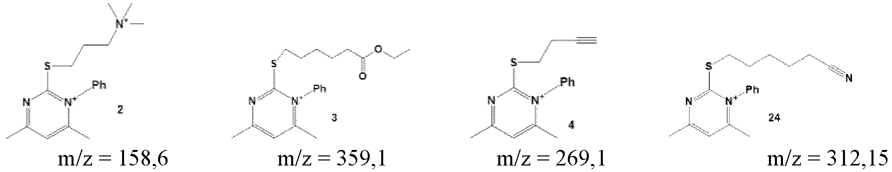 La préparation de ces quatre composés a été réalisée de manière similaire à celle du composé (5) décrit plus haut, avec des composés bromés adaptés.
4/ Bromure de 4-méthyl-1-(3-(triméthylammonio)propyl)pyrimidin-1-ium (6) 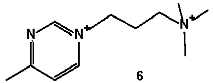 m/z = 97,6
   La 4-méthylpyrimidine (250 mg ; 2,66 mmol) est mise en réaction avec le bromo-propyltriméthylammonium (1,383 g; 5,32 mmol) dans 13 mL d'ACN à 95°C pendant 72 heures. Le milieu réactionnel est séché à l'aide d'un évaporateur rotatif. Le produit est lavé avec un mélange 1:1 DCM/eau puis séché à nouveau à l'aide de l'évaporateur rotatif pour donner le composé pyrimidinium (6) attendu (0,295 g ; rendement = 31,2 %).

### 1.1.b. Synthèse de dérivés quinoléinium, utilisés comme composés intermédiaires dans la préparation de marqueurs fluorescents selon l'invention, pour lesquels la longueur du segment alcényle équivaut à n = 1 (cf. Figure 2)

1/ 4-méthyl-1-phenylquinoléin-2(1H)-one (25) 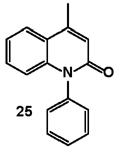 m/z = 235,1
   Dans un tricol de 250 mL, équipé d'un agitateur magnétique, d'un réfrigérant et d'une arrivée d'argon, placer 5 g (0,031 mole) de 2-hydroxy-4-méthylquinoléine, 9,6 g (0,094 mole) d'iodobenzène (BzI) et 12 g (0,188 mole) de cuivre, en suspension dans 80 mL de diméthylformamide (DMF) anhydre, en présence de K₂CO₃ (4,34 g ; 0,0314 mole) au reflux pendant la nuit. De l'eau distillée (100 mL) est alors ajoutée et le mélange est extrait avec 3 fois 100 mL d'acétate d'éthyle. La phase organique est séchée sur sulfate de sodium anhydre, filtrée sur papier filtre, puis évaporée à sec à l'aide d'un évaporateur rotatif. Le composé (25), obtenu sous la forme d'un solide marron, est purifié sur colonne de silice (EtOAc/cyclohexane : 50/50) (6,28 g ; rendement de 85 %).
2/ Chlorure de 2-chloro-4-méthyl-1-phénylquinoléin-1-ium (7) 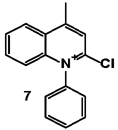 m/z = 254,07
   Dans un monocol de 50 mL, équipé d'un agitateur magnétique, d'un réfrigérant et d'une arrivée d'argon, placer 2 g (0,0085 mole) de 1,2-dihydro-4-méthyl-1-phényl-2-pyridone (25), 2,38 mL (0,025 mole) de POCl₃ et 30 mL de DCM. Le mélange réactionnel est agité à 110°C pendant 4 heures. La phase organique est évaporée à l'aide d'un évaporateur rotatif, pour donner 1,75 g de composé (7), sous forme solide marron (rendement de 81 %).
3/ N-(4-chloroquinoléin-7-yl) acétamide (7b) 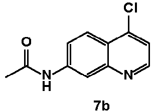 m/z = 221,04
   Dans un tube à vis de 20 mL, on introduit de la 4-chloroquinoléin-7-amine (0,300 g ; 1,78 mmol) et de l'anhydride acétique (1,2 éq. ; 202, 1 µL ; 2,1 mmol). Le tube est ensuite vissé avec un bouchon muni d'un joint et placé dans un réacteur micro-ondes. La réaction est effectuée à 60°C pendant 1 heure. Ensuite, le milieu est séché à l'aide d'un évaporateur rotatif pour obtenir le produit acétylé (7b) avec un rendement de 67 %.
4/ Triflate de N-(4-chloro-1-méthyl-quinoléin-1-ium-7-yl) acétamide (8a) 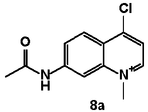 m/z = 235,06
   Une solution de N-(4-chloroquiloléin-7-yl)acétamide (1,00 éq., 174 mg ; 0,789 mmol) dans du 1,2-dichloroéthane (5 mL ; 0,17 M) à température ambiante (22°C) a été traitée avec du trifluorométhanesulfonate de méthyle (MeOTf, 0,15 mL, 1,33 mmol, 1,68 éq.). Le mélange réactionnel a été agité à température ambiante pendant 3 heures. La conversion était presque complète. 0,05 mL de MeOTf a été ajouté pour compléter la réaction. Le mélange réactionnel a été dilué avec du méthyl-tert-butyle éther. Le solide a été filtré et séché sous vide pour donner une poudre blanc cassé (248 mg ; rendement de 76,02 %).
5/ Triflate de 4-chloro-1-méthylquinoléin-1-ium (8) 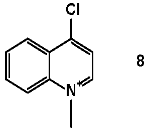
   *RMN ¹H (200MHz ; D₂O ; δ= 4,7 ppm) δ : 9,05-9,02 (d, ³J_{H,H}=6Hz, 1H ; Ar-H) ;*
   *8,55-8,51 (d, ³J_{H,H}=8Hz, 1H ; Ar-H) ; 8,32-8,15 (m, 2H ; Ar-H) ; 8,08-7,95 (m, 2H ;*
   *Ar-H) ; 4,51 (s, 3H ; CH₃-N).*
   *RMN ¹³C (50MHz ; D2O) ô : 153,97; 148,63 ; 139,16; 136,52 ; 130,95 ; 127,61 ;*
   *126, 58 ; 122,08 ; 118,90 ; 45,25.*
   Dans un ballon monocol de 50 mL muni d'une agitation magnétique, 1 g (6,11 mmoles) de 4-chloroquinoléine sont dissous dans du toluène (10 mL). Le mélange est placé sous agitation à 0°C (bain eau/glace). Du triflate de méthyle (6,72 mmoles ; 0,735 mL) est ajouté et le mélange est laissé sous agitation à froid pour 30 min, puis à température ambiante pour 2 heures. Une suspension est obtenue et le solide est récupéré par filtration. Le produit blanc est lavé au toluène (2 x 10 mL), puis à l'éther éthylique (10 mL) et séché à l'aide d'un évaporateur rotatif, pour donner le 4-chloro-1-methylquinoléin-1-ium triflate (1,971 g ; rendement de 98 %).
6/ Triflate de 2-chloro-1-methylquinoléin-1-ium (9) 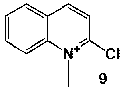
   *RMN ¹H (200MHz ; D₂O ; δ= 4,7 ppm) δ : 8,93-8,88 (d, ³J_{H,H}=10Hz, 1H ; Ar-H) ; 8,35-8,31 (d, ³J_{H,H}=8Hz, 1H ; Ar-H) ; 8,30-8,12 (m, 2H ; Ar-H) ; 8,12-8,06 (d, ³J_{H,H}=12Hz,*
   *1H ; Ar-H) ; 7,94-7,86 (t, ³J_{H,H}=8Hz, 1H, Ar-H) ; 4,59 (s, 3H ; CH₃-N).*
   *RMN ¹³C (50MHz ; D₂O) δ : 152,07; 147,67 ; 140,59; 136, 52 ; 130,72; 130,0; 128,07 ;*
   *124,20; 122,69; 118,16; 116,39; 41,14.*
   m/z = 97,6
   La synthèse est réalisée de la même manière que pour la synthèse du composé 8 avec la chloroquinoléine correspondante pour donner le 2-chloro-1-méthylquinoléin-1-ium triflate (9) (6,9 g ; rendement de 97 %).

### I.1.c. Obtention de marqueurs fluorescents selon l'invention, pour lesquels la longueur du segment alcényle équivaut à n = 1 (cf. Figure 2)

1/ Bis Trifluoroacétate de (Z)-4-méthyl-2-((6-méthyl-1-phényl-2-((3-(triméthylammonio)-propyl)thio)pyrimidin-4(1H)-ylidène)méthyl)-1-phénylquinoléin-1-ium (I.1) 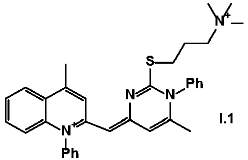 m/z = 267,1
   Dans un ballon de 50 mL muni d'une agitation magnétique, le composé triméthylpropyl-ammonium-pyrimidinium (2) (100 mg ; 300 µmol) est mis en réaction avec le composé 2-chloro-phénylquinoléin-1-ium (7) (80 mg ; 300 µmol), ainsi que 2 équivalents de triéthylamine (TEA) (88,2 µL ; 632 µmol) dans 5 mL d'ACN. Le mélange réactionnel est laissé sous agitation à température ambiante pendant 30 minutes. Le mélange est séché à l'aide d'un évaporateur rotatif. Le produit est purifié sur colonne de silice RP18 avec un éluant A (10 mM TFA dans l'eau) et un éluant B (10 mM TFA, dans 90 % ACN et 10 % eau). Le gradient est de 5 à 100 % de l'éluant B en 40 min. On obtient le marqueur 1.1 (75 mg) avec un rendement de 45 %.
2/ Bis Trifluoroacétate de (Z)-1-méthyl-4-((6-méthyl-1-phényl-2-((3-(triméthylammonio)-propyl)thio)pyrimidin-4(1H)-ylidène)méthyl)quinoléin-1-ium (I.3) 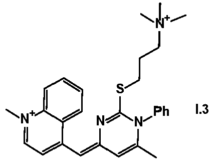 m/z = 229,1
   Le même protocole que pour la synthèse du marqueur 1.1 est utilisé avec une mise en réaction du composé 4-chloro-1-méthylquinoléin-1-ium (8) (35 mg ; 105 µmol) avec le composé triméthylpropylammonium pyrimidinium (2) (50 mg ; 105 µmol), ainsi que 2 équivalents de TEA (29,2 µL ; 210 µmol) dans 5 mL d'ACN, pour donner le marqueur I.3 (43 mg ; rendement de 60 %)
3/ Bis trifluoacétate de (Z)-7-acétamido-1-méthyl-4-((6-méthyl-1-phényl-2-((3-(triméthylammonio) propyl) thio) pyrimidin-4(1H)-ylidène) méthyl) quinoléin-1-ium (I.6) 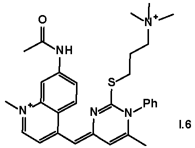 m/z = 257,6
   Le même protocole que pour la synthèse du marqueur 1.1 est utilisé avec une mise en réaction du composé 7-acétamido-4-chloro-1-méthylquinoléin-1-ium (8a) (60 mg ; 155 µmol) avec le triméthylpropylammonium pyrimidinium (2) (80 mg ; 155 µmol), ainsi que 2 équivalents de TEA (43,2 µL ; 310 µmol) dans 5 mL d'ACN, pour donner le marqueur I.6 (81 mg ; rendement de 61 %).
4) Bis trifluoacétate (Z)-1-méthyl-2-((6-méthyl-1-phényl-2-((3-(triméthylammonio) propyl)-thio) pyrimidin-4(1H)-ylidène) méthyl) quinoléin-1-ium (I.2) 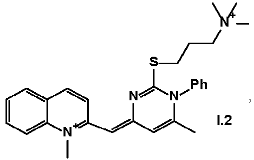 m/z = 229,1
   Le même protocole que pour la synthèse du marqueur 1.1 est utilisé avec une mise en réaction du composé 2-chloro-1-méthylquinoléin-1-ium (9) (35 mg, 105 µmol) avec le triméthylpropylammonium pyrimidinium (2) (50 mg, 105 µmol), ainsi que 2 équivalents de TEA (29,2 µL ; 210 µmol) dans 5 mL d'ACN, pour donner le marqueur I.2 (45 mg ; rendement de 62 %).
5/ Bis trifluoroacetate de (Z)-1-méthyl-2-((1-(3-(triméthylammonio) propyl) pyrimidin-4(1H)-ylidène) méthyl) quinoléin-1-ium (I.4) 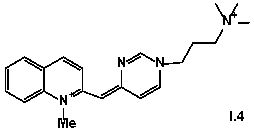 m/z = 168,1
   Le même protocole que pour la synthèse du marqueur 1.1 est utilisé avec une mise en réaction du composé 2-chloro-1-méthylquinoléin-1-ium (9) (70 mg, 201 µmοl) avec le 4-méthyl-1-(3-(triméthylammonio)propyl)pyrimidin-1-ium (6) (73 mg, 201 µmol), ainsi que 2 équivalents de TEA (56 µL ; 402 µmol) dans 5 mL d'ACN, pour donner le marqueur I.4 (75 mg ; rendement de 66 %).

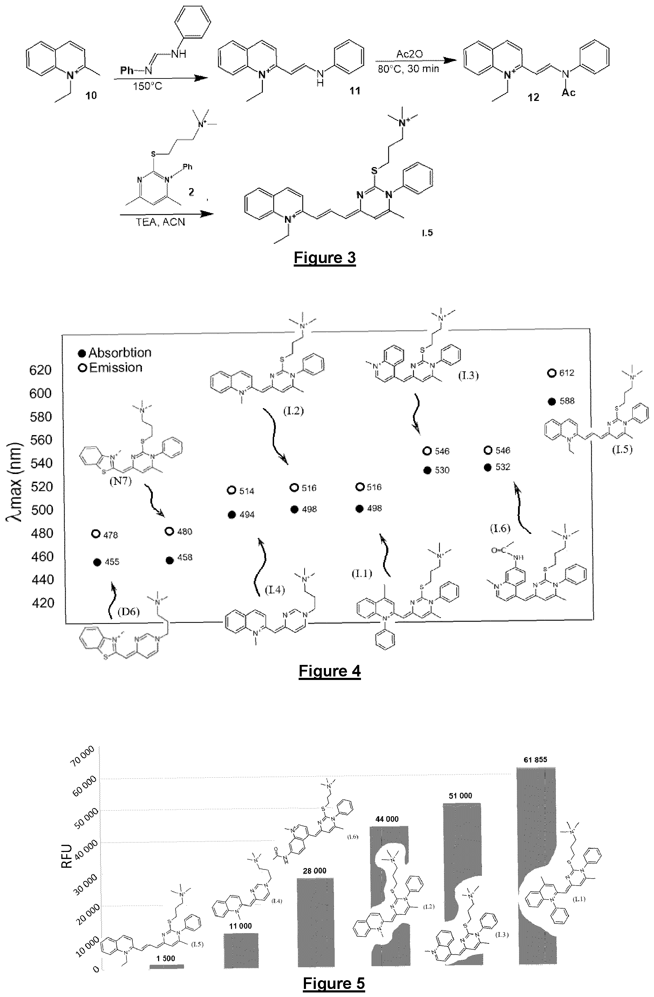

### I.1.d. Synthèse de dérivés pyrimidinium, utilisés comme composés intermédiaires dans la préparation de marqueurs fluorescents selon l'invention, pour lesquels la longueur du segment alcényle équivaut à n = 2 (cf. Figure 3)

1/ Trifluoroacétate de (E)-1-éthyl-2-(2-(phénylamino) vinyl)quinoléin-1-ium (11) 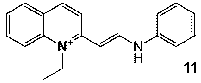 m/z = 275,15
   L'iodure d'éthylquinaldinium (10) (417,7 mg ; 1,40 mmol) a été placé dans un ballon de 50 mL avec la N,N'-diphénylformamidine (575,4 mg ; 2,10 mmol). Le mélange a été agité et chauffé à 150°C (réaction de fusion) pendant 40 minutes. Le mélange a ensuite été laissé à refroidir à température ambiante. Le composé (11) sous forme de sel TFA a été obtenu après purification par chromatographie flash inverse avec l'éluant A (10 mM TFA dans l'eau), l'éluant B (10 mM TFA, dans 90 % d'ACN et 10 % d'eau). Le gradient était de 5 à 100 % d'éluantB en 45 minutes. 543 mg de composé (11) a été récupéré, soit un rendement de 100 %.
2/ Acétate de 1-éthyl-2-(2-(N-phénylacétamido)vinyl)quinoléin-1-ium (12) 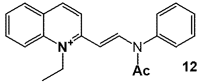 m/z = 317,16
   Le trifluoroacétate de 1-éthyl-2-(2-(phénylamino) vinyl) quinoléin-1-ium (11) (306,5 mg ; 762 µmol) a été versé dans un ballon de 50 mL et a été séché deux fois avec 10 mL d'ACN anhydre. Ensuite, un volume de 3313 µL d'anhydride acétique (3578 mg ; 30 µmol) a été ajouté. Le mélange a ensuite été agité à 75°C pendant 2 heures. Le solvant a été évaporé à l'aide d'un évaporateur rotatif. Puis, il a été co-évaporé deux fois avec 10 mL d'ACN anhydre. Le composé (12) a été obtenu sans purification supplémentaire (387 mg ; rendement de 100 %).

### I.1.e. Obtention de marqueurs fluorescents selon l'invention, pour lesquels la longueur du segment alcényle équivaut à n = 2 (cf. Figure 3)

1/ Bis trifluoroacétate de 1-éthyl-2-((1E,3Z)-3-(6-méthyl-1-phényl-2-((3-(triméthyl-ammonio) propyl) thio) pyrimidin-4(1H)-ylidène) prop-1-èn-1-yl) quinoléin-1-ium (I.5) 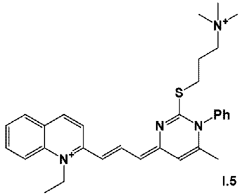 m/z = 249,1
   Le même protocole que pour la synthèse du marqueur 1.1 est utilisé avec une mise en réaction du composé N-(phénylacétamido) vinyl) quinoléin-1-ium (12) (50 mg, 113 µmol) avec le triméthylpropylammonium pyrimidinium (2) (47 mg, 113 µmol), ainsi que 2 équivalents de TEA (31,5 µL ; 226 µmol) dans 5 mL d'ACN pour donner le marqueur I.5 (35 mg ; rendement de 42 %).

### I.2. Evaluation des propriétés de fluorescence des marqueurs selon l'invention

### I.2.a. Analyse spectrofluorimétrique, dans les conditions opératoires d'une amplification PCR

Les propriétés de fluorescence des marqueurs notés I.1 à I.6, sous forme de sels de l'acide trifluoroacétique, ont été analysées dans les conditions classiques d'une réaction PCR. Pour ce faire, à 20 µL d'un mélange réactionnel de PCR typique (Tris pH 8,4 20 mM, NaCl 10 mM, dNTP (4x0,3 mM), MgCl₂ 4 mM, TAQ polymérase 1 U/µL et BSA 550 ng/µL), ont été ajoutés :
- chacun des marqueurs selon l'invention (pour une concentration finale de 10 µM), et
- un brin d'ADN double brin d'une longueur de 80 mers (pour une concentration finale de 0,13 µg/µL (5 µM) ; ceci correspond approximativement à la quantité d'amplicon généralement produit à l'issue d'une réaction PCR standard).

Les mélanges ainsi préparés ont ensuite été transvasés dans des microplaques, pour être analysés au moyen d'un spectrofluorimètre (TECAN, Autriche).

A des fins de comparaison, des mélanges réactionnels de PCR similaires ont également été préparés avec les marqueurs notés D6 et N7 de US 7,387,887, et la fluorescence de ces mélanges a été analysée.

Les Figures 4 et 5 présentent, sous forme graphique, quelques propriétés de fluorescence intéressantes des marqueurs testés, et comment celles-ci peuvent être modulées en fonction des caractéristiques structurelles secondaires des composés.

Plus spécifiquement, la Figure 4 met en lumière une large gamme de longueurs d'onde d'émission et d'absorption, dans le spectre visible, qu'offrent les marqueurs selon l'invention. Elle montre également comment ces longueurs d'onde d'émission et d'absorption peuvent être modulées en fonction de la position de fixation du noyau pyrimidine/pyridiminium sur le noyau quinoléine/quinoléinium, et de la longueur du segment raccordant ces deux noyaux aromatiques.

En l'occurrence, les longueurs d'onde d'émission démarrent aux alentours de 510 nm -avec les composés dont le noyau pyrimidine/pyridiminium est fixé au carbone 2 (position R') du noyau quinoléine/quinoléinium, par un segment alcényle de taille minimale-. Ces longueurs d'onde d'émission peuvent progresser rapidement jusqu'à dépasser les 600 nm, si l'on allonge ledit segment alcényle et que l'on déplace la fixation du noyau pyrimidine/pyridiminium du carbone 2 (position R') au carbone 4 (position R") du noyau quinoléine/quinoléinium. De la même manière, la plage de longueurs d'onde d'absorption des composés selon l'invention varie de 490 nm environ à plus de 580 nm.

La Figure 5 présente l'intensité maximale de fluorescence enregistrée pour ces mêmes exemples de marqueurs selon l'invention. Les mesures ont été réalisées en exposant chaque mélange (et donc chaque marqueur testé) à un rayonnement de longueur d'onde de 30 nm en dessous de la longueur d'onde d'absorption maximale préalablement enregistrée pour le marqueur considéré. La Figure 5 illustre également comment l'intensité de fluorescence peut être modulée en fonction des chaînes latérales greffées à la structure de résonance de composés selon l'invention.

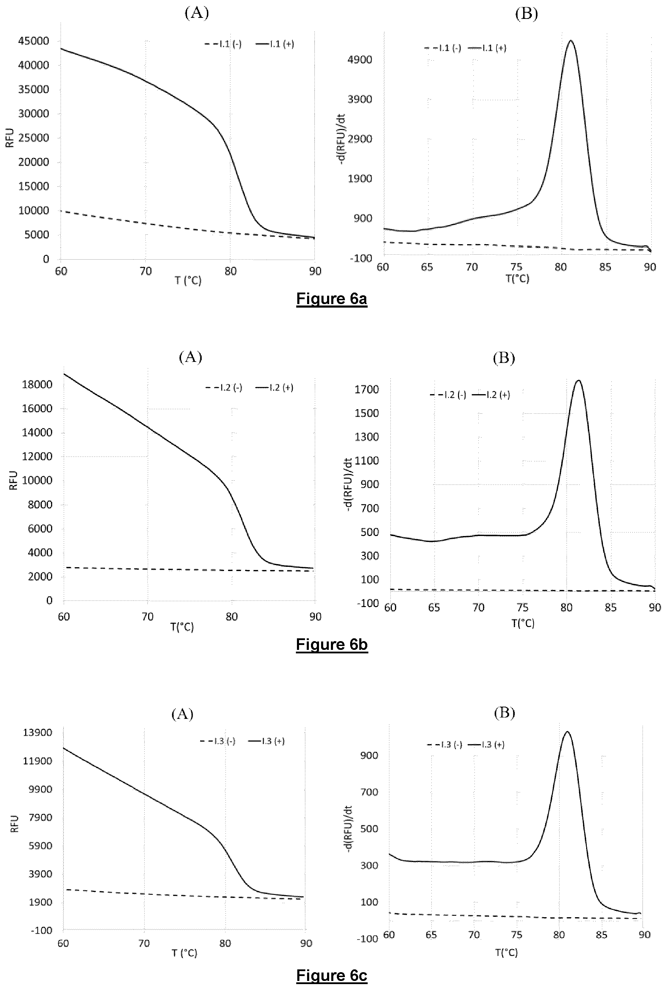

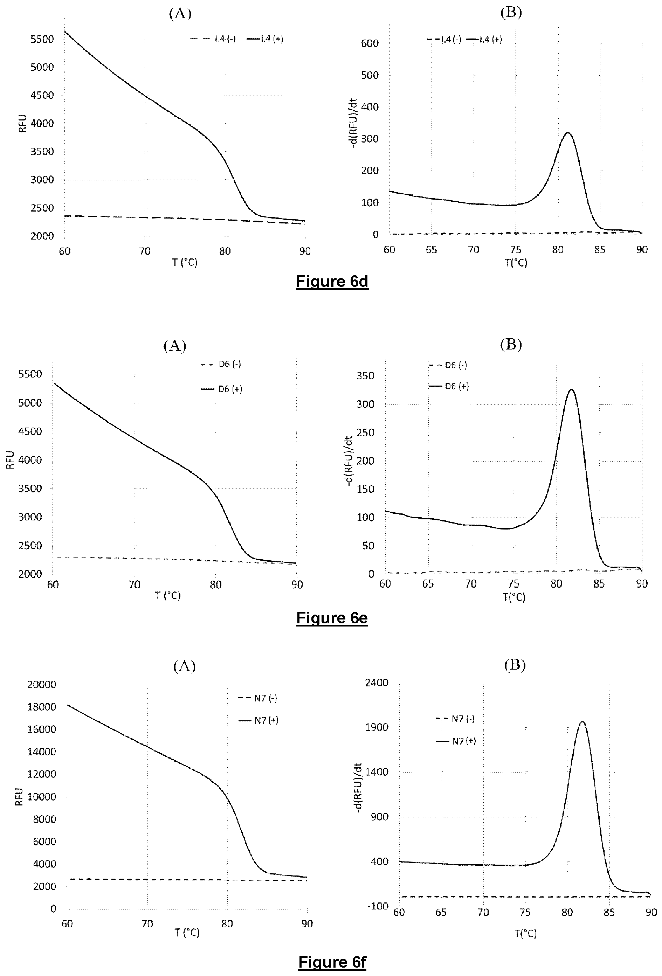

### I.2.b. Evaluation de la capacité des marqueurs selon l'invention à pouvoir se lier à l'ADN, par une analyse de courbes de fusion (cf. Figures 6a à 6f)

L'analyse de la courbe de fusion des ADN est une technique utilisée en biologie moléculaire pour identifier et caractériser des séquences d'ADN, en fonction de leur stabilité thermique. Elle est également utilisée pour détecter des mutations ponctuelles (SNPs) ou d'autres variations génétiques. Son principe repose sur la mesure de la température à laquelle les ADN doubles brin se dénaturent pour former de simples brins, et plus spécifiquement sur la mesure de la température de fusion, généralement notée Tm (m, pour *"melting"),* qui correspond précisément à la température pour laquelle 50 % de l'ADN cible est dénaturé. Cette température de fusion est caractéristique de la séquence d'ADN ; elle dépend de sa composition en bases nucléiques (ratios respectifs en A, T, G, et C).

Pour ce faire, de manière très schématique, une réaction d'amplification par PCR est réalisée pour amplifier un ADN cible recherché dans un échantillon. Des marqueurs à fluorescence ADN-dépendante sont ajoutés à la réaction. La fluorescence de l'échantillon s'intensifie avec la multiplication des amplicons. Une fois obtenue une quantité suffisante d'amplicons, l'échantillon est chauffé progressivement, généralement de 50°C à 95°C. A mesure que la température augmente, les brins d'ADN se séparent et les marqueurs se décrochent des amplicons, entraînant une diminution de la fluorescence. La décroissance de fluorescence est mesurée en continu pendant le chauffage. La courbe illustrant la décroissance de la fluorescence en fonction de la température est appelée courbe de fusion. Le tracé de la dérivée première de cette courbe permet de déterminer la température de fusion de l'amplicon correspondant (Tm).

Les marqueurs aptes à une telle application doivent répondre à plusieurs critères, notamment :
- une affinité suffisante avec l'ADN double brin pour garantir une fluorescence maximale en cas d'interaction étroite ;
- une compatibilité avec la PCR ; les marqueurs doivent être compatibles avec la réaction de PCR et ne pas inhiber l'amplification de l'ADN ;
- une fluorescence sensible et un bon rendement quantique, c'est-à-dire que la fluorescence doit être significative uniquement lorsque les marqueurs interagissent avec l'ADN double brin, et minimale en l'absence d'interaction ;
- une stabilité thermique ; les marqueurs doivent être thermiquement stables sur la plage de températures utilisée lors de l'analyse de la courbe de fusion (généralement de 50°C à 95°C) et ne pas varier en fluorescence avec l'élévation de la température ;
- une bonne saturation de l'ADN et/ou et une absence de réassociation ; le phénomène de *"dye jumping"* doit être évité, c'est-à-dire les marqueurs libérés par la fusion de l'ADN ne doivent pas se réincorporer ailleurs, ce qui fausserait les mesures.

Dans le présent exemple, pour évaluer la capacité des composés selon l'invention à pouvoir lier l'ADN, le protocole ci-après a été appliqué et un thermocycleur PCR en temps réel de la série CFX de BioRad a été utilisé.

Les marqueurs 1.1 à I.6 ont été testés à 1 µM, dans des solutions reprenant la formulation d'un mélange réactionnel PCR typique (Tris pH 8,4 20 mM, NaCl 10 mM, tampon stabilisateur 1X, dNTP (4x0,3 mM), MgCl₂ 4 mM, TAQ polymérase 1 U/µL et BSA 550 ng/µL), en l'absence (-) ou en présence (+) de deux brins d'ADN complémentaires (80 mers, 5 µM chacun). Les solutions sont placées dans une cuve en polypropylène PCR de 20 µL, puis introduites dans le thermocycleur. Chaque solution est d'abord soumise à une étape de dénaturation préalable d'1 minute à 95°C. Au cours du refroidissement, les brins d'ADN se réapparient en doubles brins, et les marqueurs se lient à l'ADN. Après refroidissement, la solution est progressivement chauffée de 20°C à 90°C, avec une montée en température de 0,5°C/min.

Pendant la durée de chauffage, les variations de fluorescence émise par la solution sont enregistrées en fonction de la température. Le canal de détection approprié est choisi en fonction des caractéristiques de fluorescence des marqueurs analysés. Le canal FAM (*Fluorescein,* se caractérise par une plage de longueurs d'excitation, λ_{Abs}, allant de 450 à 490 nm, et une plage de détection, λ_{Em}, de 515 à 530 nm) a été utilisé pour tous les composés, sauf pour les composés I.3 et I.5. Pour ces derniers, le canal HEX (*Hexachlorofluorescein,* λ_{Abs} 515-535 nm, et λ_{Em} 560-580 nm) et le canal CY5 (*Cyanine 5,* λ_{Abs} 620-650 nm, et λ_{Em} 675-690 nm) ont été respectivement utilisés.

Les résultats et variations de fluorescence enregistrés sont analysés au moyen du logiciel CFX Maestro (Bio-Rad). Les Figures 6a à 6f présentent les courbes de fusion (A) et les tracés des dérivées premières (B) obtenus pour l'analyse d'un ADN double brin de 80-mers, en présence des marqueurs 1.1 à I.4.

A titre de comparaison, les Figures 6e et 6f présentent les courbes de fusion (A) et les dérivées premières (B) obtenues pour l'analyse du même brin d'ADN, marqué avec deux marqueurs de l'art antérieur, à savoir les composés D6 et N7 de US 7,387,887.

### II. Sondes nucléiques conjuguées selon l'invention

### II.1. Précurseurs selon l'invention, pour la préparation de sondes nucléiques conjuguées

Le Tableau 2 ci-après présente des exemples de réalisation de composés précurseurs de synthèse selon l'invention, et répondant à la formule II, plus spécifiquement à la formule (IIa) ou (IIb) selon l'invention :

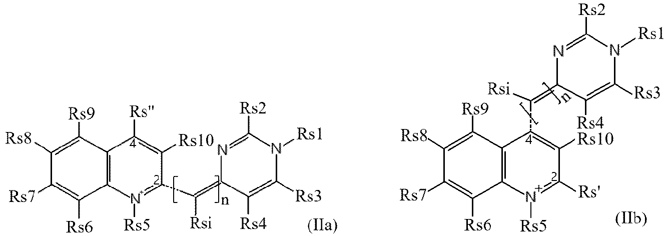

**Tableau 2**

| Précurseur | Form. Ia/Ib | n | Rs1 | Rs2 | Rs3 | Rs4 | Rs5 | Rs6-Rs10, Rs'/Rs" |
|---|---|---|---|---|---|---|---|---|
| I.7 | Ia | 1 | Ph | -S-(CH₂)₅-CO-NHS | Me | H | Me | Rs6-Rs10, Rs" = H |
| I.8 | Ib | 1 | Ph | -S-(CH₂)₅-CO-NHS | Me | H | Me | Rs6-Rs10, Rs' = H |
| I.9 | Ia | 2 | Ph | -S-(CH₂)₅-CO-NHS | Me | H | Et | Rs6-Rs10, Rs" = H |
| I.10 | Ib | 2 | Ph | -S-(CH₂)₅-CO-NHS | Me | H | Me | Rs6-Rs10, Rs' = H |
| I.11 | Ia | 1 | Ph | -S-(CH₂)₂-triazolyl-(CH₂)₅-CO-NHS | Me | H | Ph | Rs6-Rs10, Rs" = H |

Les précurseurs activés sont synthétisés de telle manière qu'ils puissent être couplés à des oligonucléotides possédant une extrémité réactive, par exemple une fonction aminée.

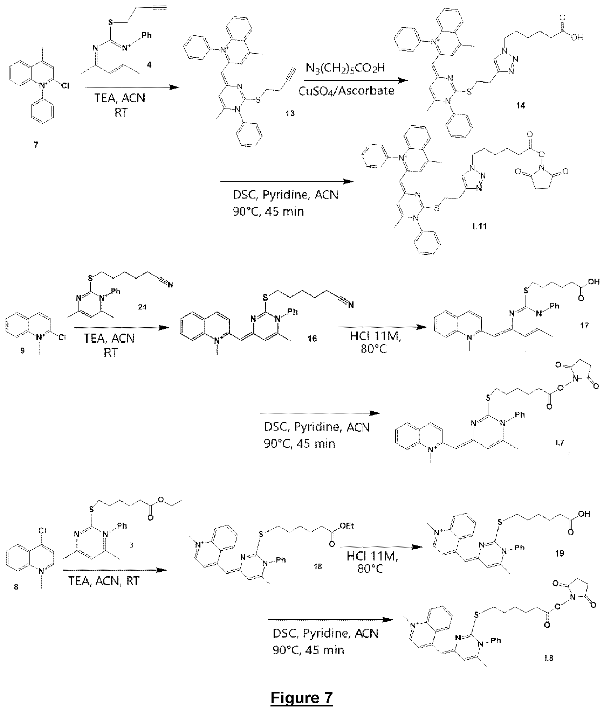

### II.La. Synthèse de précurseurs selon l'invention, pour lesquels la longueur du segment alcényle équivaut à n = 1 (cf. Figure 7)

Pour n = 1, les précurseurs sont synthétisés par réaction en milieu basique (triéthylamine) entre un ion alkylchloroquinoléinium et un ion méthylpyrimidinium doté d'une fonction acide carboxylique, masquée ou non sous forme d'ester ou de nitrile, ou d'une autre fonction réactive (alcyne par exemple), ceci afin de former avec un très bon rendement la cyanine asymétrique convenablement fonctionnalisée. La fonction ester ou nitrile, si elle est présente, est déprotégée en milieu acide fort à 90°C afin de retrouver la fonction acide carboxylique. Cette fonction est ensuite être activée sous forme d' ester N-hydroxysuccinimide à 95°C dans de la pyridine. Tous les composés intermédiaires sont purifiés par chromatographie sur colonne (ACN/TFA) ou par extraction liquide/liquide. Dans le cas de la fonction alcyne, cette fonction peut être utilisée pour réagir par la réaction de Huigsteen avec un groupement azide porté par un oligonucléotide.
1/ Trifluoacétate de (Z)-2-((2-(but-3-yn-1-ylthio)-6-méthyl-1-phénylpyrimidin-4(1H)-ylidène) méthyl)-4-méthyl-1-phénylquinoléin-1-ium (13) 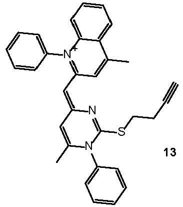 m/z = 486,2
   Le même protocole que pour la synthèse du marqueur 1.1 est utilisé avec une mise en réaction du 2-chloroquinoléinium (7) (100 mg ; 371 µmol) avec le composé alcynylpyrimidinium (4) (95 mg ; 371 µmol), ainsi que 2 équivalents de TEA (103 µL ; 742 µmol) dans 5 mL d'ACN pour donner la cyanine asymétrique (13) (35 mg ; rendement de 42 %).
2/ Trifluoacétate de (Z)-2-((2-((2-(l-(5-carboxypentyl)-1H-1,2,3-triazol-4-yl)éthyl)thio)-6-méthyl-1-phénylpyrimidin-4(1H)-ylidène)méthyl)-4-méthyl-1-phénylquinoléin-1-ium (14) 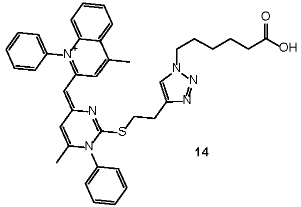 m/z = 643,3
   Dans un ballon de 50 mL muni d'une agitation magnétique, placer 100 mg (205 µmol) de cyanine alcynyle (13), ajouter 32 mg (205 µmol) d'acide 6-azidohexanoique. Dissoudre le tout dans 10 mL d'EtOH. D'autre part, mélanger ensemble 3,3 mL de sulfate de cuivre à 0,3 mol/L dans l'eau et 4,9 mL d'ascorbate de sodium (AscNa) à 100 mmol/L dans l'eau pour observer la formation d'une couleur brune. Ajouter la solution de CuSO₄/AscNa au mélange réactionnel dans le ballon. Laisser sous agitation à température ambiante (RT) pendant 30 min. Sécher le mélange réactionnel à l'aide d'un évaporateur rotatif. Le produit est purifié sur colonne de silice RP18 avec un éluant A (10 mM TFA dans l'eau) et un éluant B (10 mM TFA dans 90 % ACN et 10 % eau). Le gradient est de 5 à 100 % de l'éluant B en 40 min. On obtient le composé conjugué (14) (70 mg) avec un rendement de 53 %.
3/ Trifluoroacétate de (Z)-2-((2-((2-(1-(6-((2,5-dioxopyrrolidin-1-yl)oxy)-6-oxohexyl)-1H-1,2,3-triazol-4-yl)éthyl)thio)-6-méthyl-1-phénylpyrimidin-4(1H)-ylidène)méthyl)-4-méthyl-1-phénylquinoléin-1-ium (I.11) 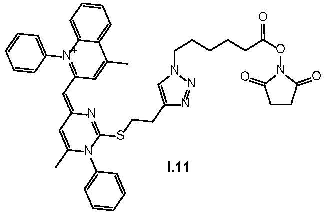 m/z = 740,3
   Dans un tube à vis de 15 mL, on introduit le composé (14) (40 mg ; 62,2 µmol), du di-(N,N'-succinimidyl) carbonate (DSC) (15 éq. ; 239 mg ; 933 µmol), de la pyridine (15 éq. ; 75,1 µL ; 933 µmol) et 4 mL d'ACN. Le tube est ensuite vissé avec un bouchon muni d'un joint et placé dans un thermomixeur à 90°C pendant 20 minutes. On sèche le mélange réactionnel à l'aide d'un évaporateur rotatif. Le produit est purifié sur colonne de silice à phase inverse RP18 avec un éluant A (10 mM TFA dans l'eau) et un éluant B (10 mM TFA dans 90 % ACN et 10 % eau). Le gradient est de 5 à 100 % de l'éluant B en 40 min. On obtient le précurseur 1.11 (24 mg) avec un rendement de 52 %.
4/ Trifluoacétate (Z)-2-((2-((5-cyanopentyl)thio)-6-méthyl-1-phénylpyrimidin-4(1H)-ylidène) méthyl)-1-méthylquinoléin-1-ium (16) 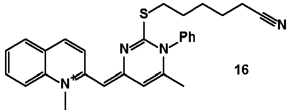 m/z = 453,2
   Le même protocole que pour la synthèse du marqueur 1.1 est utilisé avec une mise en réaction du cyanopyrimidinium (24) (200 mg ; 641 µmol) avec le 2-chloro-1-méthylquinoléin-1-ium (9) (103 mg ; 577 µmol), ainsi que 2 éq. de TEA (178 µL ; 1,28 mmol) dans 5 mL d'ACN pour donner la cyanocyanine (16) (280 mg ; rendement de 95 %).
5/ Trifluoroacétate de (Z)-2-((2-((5-carboxypentyl) thio)-6-méthyl-1-phénylpyrimidin-4(1H)-ylidène) méthyl)-1-méthylquinoléin-1-ium (17) 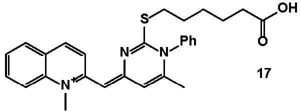 m/z = 472,2
   Dans un tube à vis de 15 mL, on introduit le composé (16) (280 mg ; 617 µmol) et de l'acide chlorhydrique 11 M (400 éq. ; 7,5 mL ; 247 mmol). Le tube est ensuite vissé avec un bouchon muni d'un joint et placé dans le thermomixeur. La réaction est effectuée à 80°C pendant 3 heures. Ensuite, le mélange est séché à l'aide d'un évaporateur rotatif. Le produit est purifié sur colonne de silice à phase inverse RP18 avec un éluant A (10 mM TFA dans l'eau) et un éluant B (10 mM TFA dans 90 % d'ACN et 10 % d'eau). Le gradient est de 5 à 100 % de l'éluant B en 40 min pour obtenir le produit d'hydrolyse (17) avec un rendement de 40 %.
6/ Trifluoacétate de (Z)-2-((2-((6-((2,5-dioxopyrrolidin-1-yl) oxy)-6-oxohexyl) thio)-6-méthyl-1-phénylpyrimidin-4(1H)-ylidène) méthyl)-1-méthylquinoléin-1-ium (I.7) 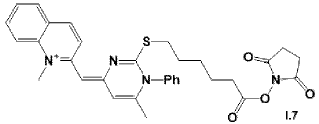 m/z = 569,2
   Le même protocole que pour la synthèse du marqueur 1.11 est utilisé avec une mise en réaction du composé (17) (98 mg ; 208 µmol) avec du di-(N,N'-succinimidyl) carbonate avec (15 éq., 797 mg ; 3,11 mmol), de la pyridine (15 éq. ; 250 µL ; 3,11 mmol) et 6 mL d'ACN, pour donner le précurseur 1.7 (76 mg ; rendement de 64 %).
7/ Trifluoacétate de (Z)-4-((2-((6-éthoxy-6-oxohexyl) thio)-6-méthyl-1-phénylpyrimidin-4(1H)-ylidène) méthyl)-1-méthylquinoléin-1-ium (18) 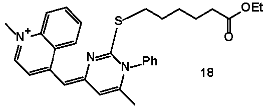 m/z = 500,2
   Le même protocole que pour la synthèse du marqueur 1.1 est utilisé avec une mise en réaction du 4-chloro-1-méthylquinoléin-1-ium (8) (69 mg ; 212 µmol) avec le composé (3) (100 mg ; 212 µmol), ainsi que 2 éq. de TEA (59,1 µL ; 424 µmol) dans 5 mL d'ACN, pour donner la cyanine (18) (83 mg ; rendement de 64 %).
8/ Trifluoro acétate de (Z)-4-((2-((5-carboxypentyl) thio)-6-méthyl-1-phénylpyrimidin-4(1H)-ylidène) methyl)-1-méthylquinoléin-1-ium (19) 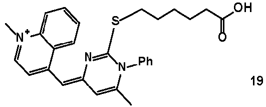 m/z = 472,2
   Dans un tube à vis de 15 mL, on introduit le composé (18) (100 mg, 212 µmol) et de l'acide chlorhydrique 11 M (200 éq., 1,28 mL, 42,4 mmol). Le tube est ensuite vissé avec un bouchon muni d'un joint, et placé dans le thermomixeur. La réaction est effectuée à 90°C pendant 5 heures. Ensuite, le mélange est séché à l'aide d'un évaporateur rotatif pour obtenir le produit d'hydrolyse (19), avec un rendement de 75 %.
9/ Trifluoroacétate de (Z)-4-((2-((6-((2,5-dioxopyrrolidin-1-yl) oxy)-6-oxohexyl) thio)-6-méthyl-1-phénylpyrimidin-4(1H)-ylidène) méthyl)-1-méthylquinoléin-1-ium (I.8) 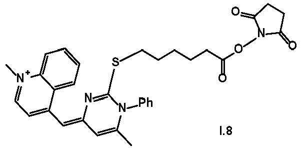 m/z = 569,2
   Le même protocole que pour la synthèse du marqueur 1.11 est utilisé avec une mise en réaction du composé (19) (50 mg ; 8,4 µmol), pour donner l'ester activé (I.8) (35 mg ; rendement de 60 %).

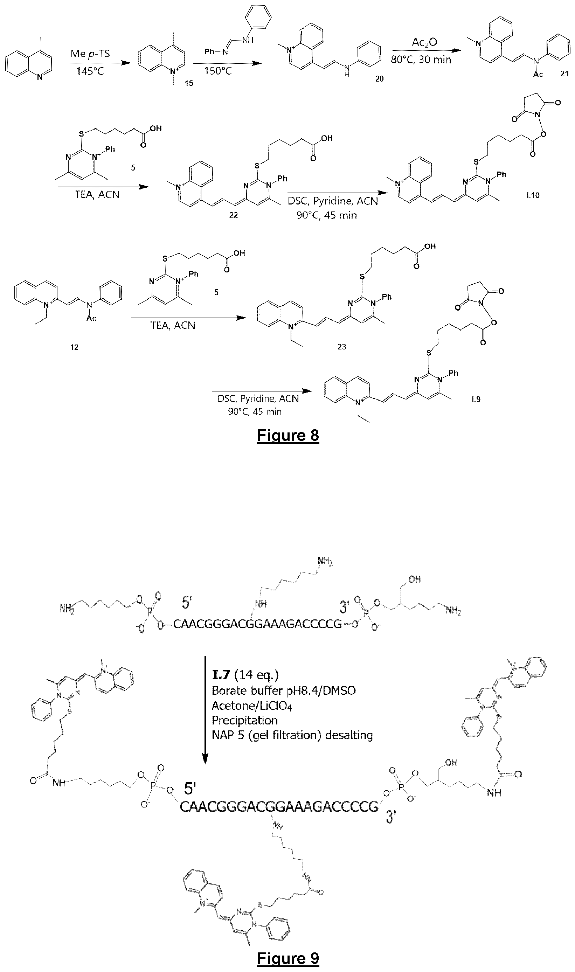

### II.1.b. Synthèse de précurseurs selon l'invention, pour lesquels la longueur du segment alcényle équivaut à n = 2 (cf. Figure 8)

Pour la synthèse des précurseurs activés avec n = 2, des quinoléines méthylées substitués de manière appropriée sont N-alkylés à haute température (par exemple de 130 à 160°C) sans solvant en présence d'un agent alkylant. Les composés quinoléinium ainsi formés peuvent ensuite réagir comme il a été décrit pour les simples marqueurs selon l'invention avec un aldéhyde masqué pour conduire à l'hémicyanine qui peut ensuite être mise en réaction dans des conditions légèrement alcalines avec un composé pyrimidinium convenablement doté d'une fonction acide carboxylique précurseur, pour conduire à la cyanine asymétrique attendue qui subit le même traitement de déprotection que ci-dessus pour conduire à la forme activée conjugable à un oligonucléotide aminé.
1/ Tosylate de 1,4-diméthylquinoléin-1-ium (15) 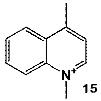 m/z = 158,1
   La 4-méthylquinoléine (1 g ; 6,84 mmol) a été placée dans un ballon de 100 mL et le *p*-toluènesulfonate de méthyle (Me *p*-TS) (3,90 g ; 20,95 mmol) a été ajouté. Le mélange a été agité et chauffé à 140°C pendant 15 minutes. Le mélange a ensuite été laissé à refroidir à température ambiante. Le produit brut a été dissous dans 50 mL d'eau et lavé 3 fois avec 50 mL de dichlorométhane. La phase aqueuse a été séchée par évaporation à l'aide d'un évaporateur rotatif, pour obtenir le composé (15) (2,31 g ; rendement de 100 %), sous la forme d'un sel tosylate.
2/ (E)-1-méthyl-4-(2-(phénylamino) vinyl) quinoléin-1-ium (20) 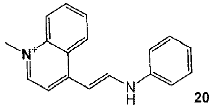 m/z = 261,1
   Le sel tosylate de 1,4-diméthylquinoléin-1-ium (15) (500 mg ; 1,52 mmol) a été placé dans un ballon de 100 mL avec la N,N'-diphénylformamidine (688,8 mg ; 3,19 mmol). Le mélange a été agité et chauffé à 150°C (réaction de fusion) pendant 45 minutes. Le mélange a ensuite été laissé à refroidir à température ambiante (RT). Le composé (20), sous forme de sel TFA, a été obtenu après purification par chromatographie flash inverse avec l'éluant A (10 mM TFA dans l'eau) et l'éluant B (10 mM TFA dans 90 % d'ACN et 10 % d'eau). Le gradient était de 5 à 100 % d'éluantB en 40 minutes. 371 mg de composé final (15) a été obtenu, soit un rendement de 56 %.
3/ Acétate de (E)-1-méthyl-4-(2-(N-phénylacétamido) vinyl) quinoléin-1-ium (21) 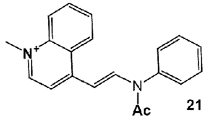 m/z = 303,1
   Le trifluoroacétate de 1-éthyl-2-(2-(phénylamino) vinyl) quinoléin-1-ium (20) (70 mg ; 162 µmol) a été versé dans un ballon de 10 mL et a été séché deux fois avec 10 mL d'ACN anhydre. Ensuite, 1408 µL (1520 mg ; 14,8 mmol) d'anhydride acétique ont été ajoutés. Le mélange a ensuite été agité à 120°C pendant 45 minutes. Le solvant a été évaporé à l'aide d'un évaporateur rotatif. Puis, le résidu de solvant a été co-évaporé deux fois avec 2 mL d'ACN anhydre. Le composé (21) a été obtenu sans purification supplémentaire (76,8 mg ; rendement de 100 %).
4/ Trifluoroacétate de 4-((1E,3Z)-3-(2-((5-carboxypentyl) thio)-6-méthyl-1-phénylpyrimidin-4(1H)-ylidène) prop-1-èn-1-yl)-1-méthylquinoléin-1-ium (22) 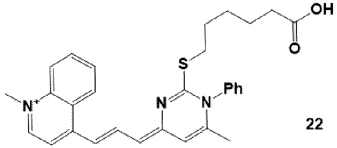 m/z = 498,2
   Le composé (21) (76,8 mg ; 162 µmol) a été versé dans un ballon de 10 mL avec le composé (5) (74 mg ; 180 µmol), 3 mL d'ACN et 0,5 mL d'éthanol. Le mélange a ensuite été agité à température ambiante pendant 2 minutes avant que 101,5 µL de TEA (73,7 mg ; 728 µmol) ne soient ajoutés. Après 10 minutes d'agitation, le mélange a été évaporé à l'aide d'un évaporateur rotatif. Ensuite, le produit brut a été purifié par chromatographie flash avec une colonne C18 de 12 g (éluant A : 10 mM TFA dans l'eau ; éluant B : 10 mM TFA dans 90 % d'ACN et 10 % d'eau ; gradient de 5 à 100 % d'éluant B en 20 minutes). Le composé (22) a été obtenu sous forme de sel de trifluoroacétate (89 mg ; rendement de 90 %).
5/ Trifluoroacétate de 4-((1E,3Z)-3-(2-((6-((2,5-dioxopyrrolidin-1-yl) oxy)-6-oxohexyl) thio)-6-méthyl-1-phénylpyrimidin-4(1H)-ylidène) prop-1-èn-1-yl)-1-méthylquinoléin-1-ium (I.10) 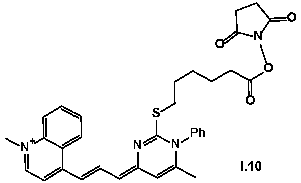 m/z = 595,2
   Le composé (22) (76,8 mg ; 126 µmol) a été versé dans un ballon de 25 mL avec de l'ACN anhydre, du carbonate de N,N'-disuccinimidyle (560 mg ; 2185 µmol) et de la pyridine (176 µL ; 172,8 mg ; 2185 µmol). Le mélange a ensuite été agité à 90°C pendant 2 heures. Le solvant a été évaporé à l'aide d'un évaporateur rotatif. Ensuite, le produit brut a été purifié par chromatographie flash avec une colonne C18 de 20 g (éluant A : 10 mM TFA dans l'eau ; éluant B : 10 mM TFA dans 90 % d'ACN et 10 % d'eau ; gradient de 5 à 90 % d'éluant B en 10 minutes puis 100 % d'éluant B pendant 5 minutes) et a conduit au précurseur 1.10, sous forme de sel de trifluoroacétate (18,9 mg ; rendement de 37 %).
6/ Trifluoroacétate de 2-((1E,3Z)-3-(2-((5-carboxypentyl) thio)-6-méthyl-1-phényl pyrimidin-4(1H)-ylidène) prop-1-èn-1-yl)-1-éthylquinoléin-1-ium (23) 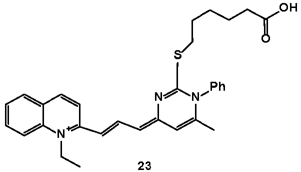 m/z = 512,2
   Le composé (12) (102,2 mg ; 230 µmol) a été versé dans un ballon de 25 mL avec le composé (5) (100,5 mg ; 253 µmol), 4 mL d'ACN et 0,5 mL d'éthanol. Le mélange a ensuite été agité à température ambiante pendant 2 minutes avant que 32 µL de TEA (23,3 mg ; 230 µmol) ne soient ajoutés. Après 10 minutes d'agitation, le mélange a été évaporé à l'aide d'un évaporateur rotatif. Ensuite, le produit brut a été purifié par chromatographie flash avec une colonne C18 de 12 g (éluant A : 10 mM TFA dans l'eau ; éluant B : 10 mM TFA dans 90 % d'ACN et 10 % d'eau ; gradient de 10 à 80 % d'éluant B en 20 minutes) et a conduit au composé (23) sous forme de sel de trifluoroacétate (89,4 mg ; rendement de 75 %).
7/ Trifluoroacétate de 2-((1E,3Z)-3-(2-((6-((2,5-dioxopyrrolidin-1-yl) oxy)-6-oxohexyl) thio)-6-méthyl-1-phénylpyrimidin-4(1H)-ylidène) prop-1-èn-1-yl)-1-éthylquinoléin-1-ium (I.9) 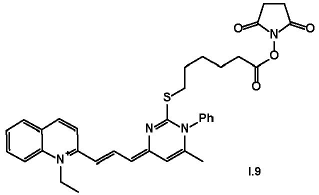 m/z = 609,2
   Le composé (23) (37,3 mg ; 60 µmol) a été versé dans un ballon de 25 mL avec de l'ACN anhydre, du carbonate de N,N'-disuccinimidyle (232 mg ; 904 µmol) et de la pyridine (72 µL ; 70,7 mg ; 94 µmol). Le mélange a ensuite été agité à 90°C pendant 2 heures. Le solvant a été évaporé à l'aide d'un évaporateur rotatif. Ensuite, le produit brut a été purifié par chromatographie flash avec une colonne C18 de 4 g (éluant A : 10 mM TFA dans l'eau ; éluant B : 10 mM TFA dans 90 % d'ACN et 10 % d'eau ; gradient de 30 à 100 % d'éluant B en 10 minutes puis 100 % d'éluant B pendant 10 minutes) et a conduit au précurseur I.9, sous forme de sel de trifluoroacétate (3,4 mg ; rendement de 8 %).

### II.2. Préparation de sondes nucléiques conjuguées selon l'invention, et évaluation

### II.2.a. Synthèse de sondes conjuguées selon l'invention, triplement marquées d'un colorant

Chacun des précurseurs 1.7 à 1.10 précédemment décrits, a été utilisé pour préparer un oligonucléotide triplement marqué : un marquage à l'extrémité 5', un marquage à l'extrémité 3' et un marquage sur un nucléotide interne.

L'oligonucléotide de départ a été commandé auprès de *Integrated DNA Technologies* (Belgique). Cet oligonucléotide, de 21-mers, a été assemblé en incorporant un nucléotide modifié à l'extrémité 5', un nucléotide modifié à l'extrémité 3,' et un nucléotide modifié interne à la séquence. Ces nucléotides modifiés sont porteurs d'une fonction amine libre destinée à permettre un couplage covalent avec les précurseurs I.7 à I.10, par l'intermédiaire de leur groupement NHS activé (ester hydroxysuccinimide).

Le couplage covalent des précurseurs 1.7 et 1.10 sur l'oligonucléotide a été réalisé de manière similaire au protocole décrit ci-après et en référence à la voie de synthèse présentée à la Figure 9, montrant le couplage du précurseur I.7 à un oligonucléotide particulier.

L'oligonucléotide séché (40 nmol) est solubilisé dans 80 µL d'un tampon borate à pH 8,5. Une solution de précurseur 1.7 sous la forme d'un ester activé de trifluoroacétate (10 mM dans du DMSO) y est ajoutée sous agitation (14 éq.). La réaction de conjugaison est surveillée par UPLC jusqu'à ce qu'elle soit terminée (au bout d'environ 2 heures). La sonde conjuguée formée est précipitée par ajout au mélange brut de 18 µL de perchlorate de lithium 3 M, 300 µL d'eau QSP et 900 µL d'acétone. Le mélange est ensuite agité, puis centrifugé à 10 000 tr/min. Le surnageant est soustrait. Le culot est remis en suspension dans 282 µL d'eau et 18 µL de perchlorate de lithium 3 M, puis agité. 900 µL d'acétone est ajoutée. Le mélange trouble formé est centrifugé à 10 000 tr/min. Le surnageant est soustrait. La même opération de lavage du culot est répétée jusqu'à ce que le surnageant devienne translucide. Ensuite, un dernier lavage du culot avec 900 µL d'acétone est effectué. L'acétone est ensuite éliminé par évaporation au moyen d'un évaporateur GeneVac (Ipswich, Royaume-Uni). Le culot séché est remis en suspension dans 200 µL d'eau et une purification est réalisé sur une colonne NAP 5 (Cytiva, Etats-Unis), selon la procédure du fabricant, pour éliminer les sels de borate alcalins résiduels. L'éluât final est neutre et son volume est ajusté à 200 µL, par ajout d'eau.

Les sondes conjuguées ainsi préparées avec les précurseurs I.7 à 1.10 de l'invention, sont notées sI7 à sI. 10, respectivement.

A titre comparatif, ce même oligonucléotide de 21-mers a également été marqué avec la structure de résonnance du composé N7 de US 7,387,887. Pour ce faire, le précurseur N7-NHS a dû être préparé : 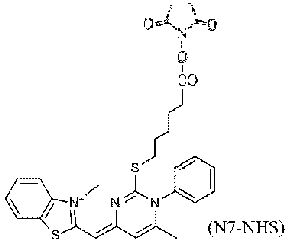 L'oligonucléotide conjugué avec le précurseur N7-NHS est noté sN7.

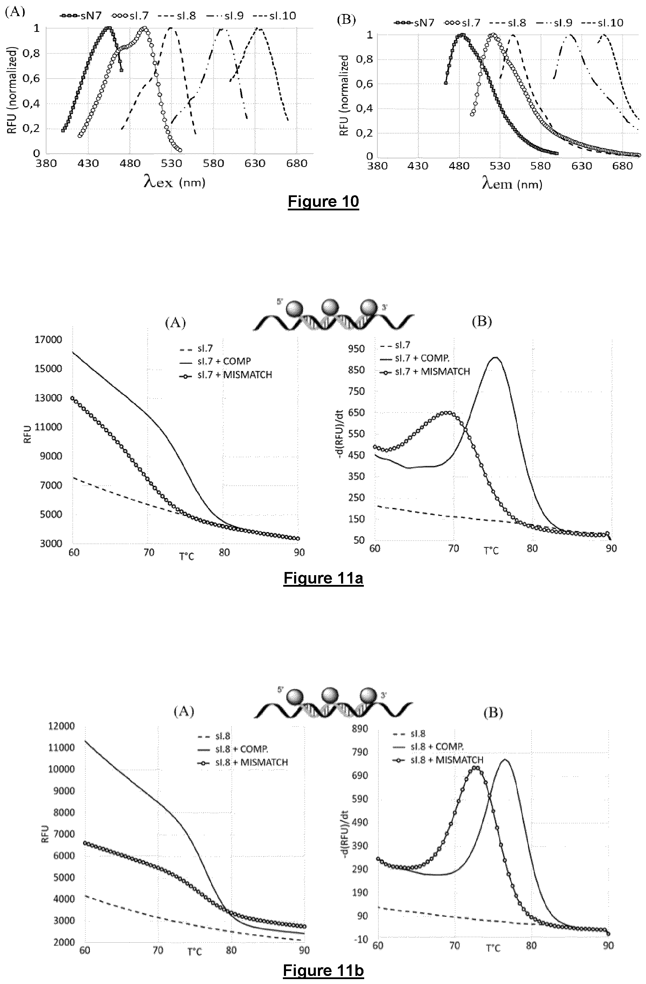

Les propriétés optiques de ces différentes sondes conjuguées ont été analysées. Les résultats obtenus sont résumés dans le Tableau 3, ainsi que dans la Figure10 pour un meilleur visuel de l'enveloppe spectrale de chaque sonde.

**Tableau 3**

| Sonde | sN7 | sI.7 | si. 8 | sI.9 | sI.10 |
|---|---|---|---|---|---|
| λₘₐₓ absorption (nm) | 454 | 498 | 530 | 592 | 632 |
| λₘₐₓ excitation (nm) | 454 | 498 | 530 | 592 | 632 |
| λₘₐₓ émission (nm) | 484 | 522 | 546 | 614 | 658 |
| Déplacement de Stokes (nm) | 30 | 24 | 16 | 20 | 26 |

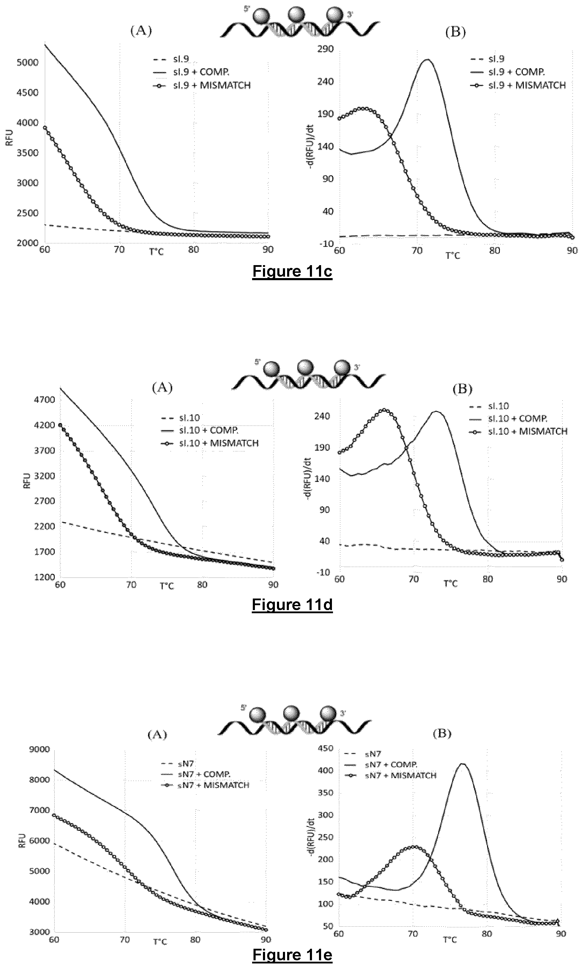

### II.2.b. Evaluation de la spécificité des sondes conjuguées (sI.7 à si. 10), triplement marquées, par une analyse de courbe de fusion (cf. Figures 11a-e)

Les performances de détection des 5 sondes nucléiques conjuguées (notés sI.7 à sI. 10, et sN7) ont été évaluées en réalisant une analyse de courbe de fusion d'un ADN double brin formé par hybridation de chacune de ces sondes avec :
- soit un brin d'ADN (noté COMP.), de 52-mers avec une région interne de 21-mers parfaitement complémentaire à l'oligonucléotide des sondes conjuguées,
- soit un brin d'ADN (noté MISMATCH), de 52-mers et quasi-identique au brin COMP. précédent, à l'exception d'une base substituée dans la même région interne.

Pour ce faire, des solutions de sondes (1 µM) ont été préparées dans 20 µL d'un tampon constitué de Tris HCL pH 8,4 20 mM de NaCl 10 mM de dNTP (4x0,3 mM), de MgCl₂ 4 mM, TAQ polymérase 0,2 U/µL et de BSA à 550 ng/µL, et auxquelles un brin COMP. ou MISMATCH a été ajouté pour obtenir une concentration finale de 4 µM.

Un thermocycleur CFX, doté du logiciel CFX Maestro de BioRad, a été utilisé pour enregistrer la fluorescence émise par les mélanges, pendant la montée en température, de 20°C à 90°C (0,5°C/min), avec une étape de dénaturation préalable d'une minute à 95°C. Le canal approprié a été utilisé en fonction des caractéristiques de fluorescence propres à chaque sonde testée. Le canal FAM (*Fluorescein,* λ_{Abs} 450-490 nm, et λ_{Em} 515-530 nm) a été utilisé pour la sonde sI.7, le canal HEX (λ_{Abs} 515-535 nm, et λ_{Em} 560-580 nm) pour la sonde sI.8, le canal Texas Red (dérivé de sulforhodamine, λ_{Abs} 560-590 nm, et λ_{Em} 610-650 nm) pour la sonde sI.9, et le canal Cy5 (λ_{Abs} 620-650 nm, et λ_{Em} de 675-690 nm) pour la sonde sI.10.

A titre de contrôle, les sondes ont été également testées en l'absence des brins COMP. et MISMATCH.

Les résultats et variations de fluorescence enregistrés sont analysés au moyen du logiciel CFX Maestro (Bio-Rad). Les Figures 11a à 11e présentent les courbes de fusion (A) et les tracés des dérivées premières (B) obtenus pour l'analyse des duplexes formés entre les sondes conjuguées testées et les brins COMP. ou MISMATCH.

Le tableau 4 ci-après résume numériquement les résultats constatés.

**Tableau 4**

| Sonde | Facteur d'exaltation, à 60°C (sonde/COMP.) | Hauteur du pic de la dérivée première (-d(RFU)/dT) à la Tm en RFU/°C (sonde/COMP.) | Température de fusion (sonde/COMP.) en °C | Température de fusion (sonde/ MISMATCH) en °C | Canal |
|---|---|---|---|---|---|
| sN7 | 1,4 | 335 | 77 | 70 | FAM |
| sI.7 | 2,1 | 771 | 75,5 | 69,5 | FAM |
| sI.8 | 2,8 | 683 | 77 | 73 | HEX |
| sI.9 | 2,3 | 274 | 71,5 | 63,5 | TEXAS RED |
| sI.10 | 2,2 | 230 | 73,5 | 66,5 | Cy5 |

### II.2.c Synthèse d'une sonde conjuguée selon l'invention (sI.11q), couplée à un marqueur fluorescent et à un quencher

Un oligonucléotide, couplé en 5' par une structure de résonance selon l'invention et marqué en 3' par un bloqueur de fluorescence, a été préparé.

Une telle structure de sonde nucléique fluorescente améliorée permet de réduire le bruit de fond de la source de fluorescence et augmenter la sensibilité de la sonde. En effet, lorsqu'une telle sonde se trouve à l'état libre (c'est-à-dire, à l'état non-hybridé à une séquence complémentaire), sa fluorescence se trouve éteinte du fait d'une proximité physique entre la source de fluorescence et le bloqueur de fluorescence ; une proximité physique possible compte tenu de la flexibilité du brin d'ADN qui permet un rapprochement des extrémités 5' et 3' de l'oligonucléotide. En s'hybridant à la séquence complémentaire, l'oligonucléotide adopte alors une conformation dépliée et étirée. Les extrémités 5' et 3' se retrouvent suffisamment éloignées, et le bloqueur de fluorescence exerce moins d'effet sur la source de fluorescence.

A titre de preuve de concept utilisant une structure de résonance selon l'invention, le précurseur 1.11 précédemment décrit et un bloqueur de fluorescence, en l'occurrence le BHQ1 *("Black Hole Quencher 1*^{™}",) ont été liés, de façon covalente, aux extrémités 5' et 3' d'un oligonucléotide simple brin de 20-mers.

BHQ1 est connu comme étant un bloqueur de fluorescence qui agit en absorbant la fluorescence sans en réémettre. Son absorption est maximale dans les longueurs d'onde de 460 à 590 nm.

L'oligonucléotide de 20-mers a été commandé auprès de *Eurogentec* (Belgique). Celui-ci a été assemblé en incorporant un groupement modifié à l'extrémité 5' et un support solide modifié à l'extrémité 3'. Le groupement modifié à l'extrémité 5' est porteur d'une fonction amine libre apte à permettre un couplage covalent avec le précurseur I.11, par l'intermédiaire de son groupement NHS activé (ester hydroxysuccinimide). Le bloqueur de fluorescence BHQ1, proposé par la compagnie *Glen Research* (USA), est incorporé à l'extrémité 3' de l'oligonucléotide en cours de synthèse à l'aide d'un support solide de type CPG.

Le couplage covalent des précurseurs I.11 et N7-NHS sur l'oligonucléotide a été réalisé de manière similaire au protocole décrit précédemment, en référence à la voie de synthèse présentée à la Figure 9. Les sondes nucléiques conjuguées ainsi préparées avec les précurseurs 1.11 et N7-NHS, et le bloqueur de fluorescence BHQ1, sont notées respectivement sI.11q et sN7q.

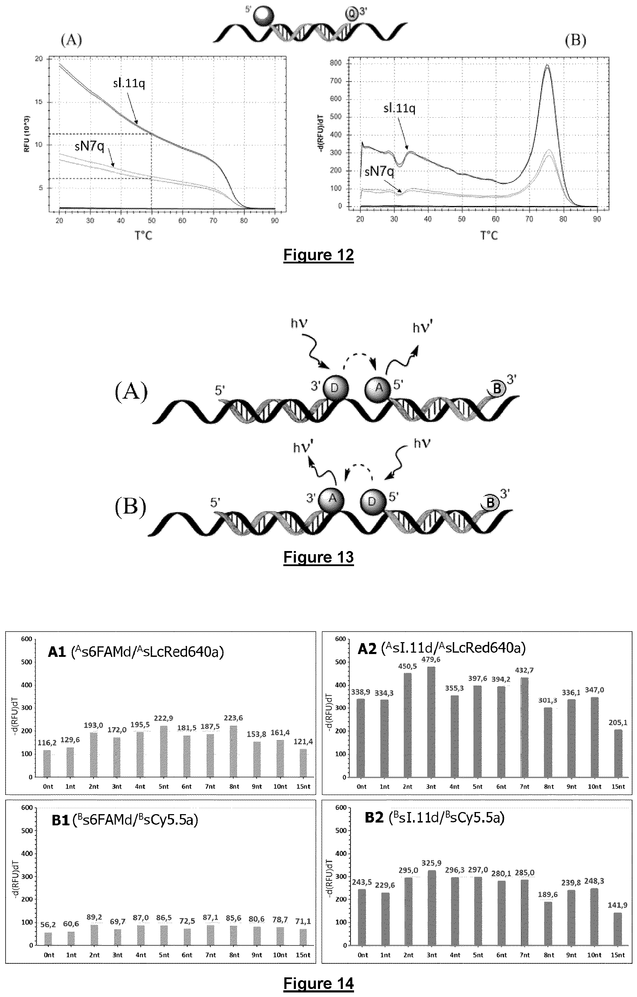

### II.2.d. Evaluation de la spécificité de la sonde conjuguée (sI.11q), couplée à un marqueur fluorescent et à un quencher (cf. Figure 12).

Les performances de détection de la sonde nucléique sI.11q ont été évaluées en réalisant une analyse de courbe de fusion d'un ADN double brin formé par hybridation de la sonde sI.11q à un fragment d'ADN simple de 30-mers ayant une région interne de 20-mers parfaitement complémentaire à l'oligonucléotide de la sonde.

Pour ce faire, la sonde a été testée à 1 µM dans des solutions reprenant la formulation d'un mélange réactionnel PCR typique (Tris pH 8,4 20 mM, NaCl 10 mM, dNTP (4x 0,3 mM), MgCl₂ 4 mM et BSA 500 ng/µL) en absence (-) ou en présence (+) de l'ADN cible, simple brin de 30-mers (5 µM).

L'analyse de la courbe de fusion a été effectué au moyen d'un thermocycleur CFX, doté du logiciel CFX Maestro de BioRad, avec une étape de dénaturation préalable d'1 minute à 95°C. Le canal FAM (qui détecte dans la plage de 515-530 nm) a été utilisé et une montée en température de 20°C à 90°C (0,5°C/min) a été appliquée.

Les résultats d'analyse obtenus sont résumés dans le Tableau 5 ci-après.

**Tableau 5**

| Sonde | Tp°_{fusion} (°C) | Hauteur du pic de la dérivée première (-d(RFU)/dT) à la Tm en RFU/°C | Intensité de fluorescence à 50°C, en présence de l'ADN cible (RFU) | Intensité de fluorescence à 50°C, en absence de l'ADN cible (RFU) | Facteur d'exaltation en RFU à 50°C |
|---|---|---|---|---|---|
| sN7q | test 1: 75,5 | test 1: 319,6 | test 1: 6366,0 | test 1: 2551,3 | 2,4 |
| | test 2: 75,5 | test 2: 286,5 | test 2: 5991,5 | test 2: 2575,7 | |
| | Moy.: 75,5 | Moy.: 303.1 | Moy.: 6178,7 | Moy.: 2563,5 | |
| sI.11q | test 1: 75,0 | test 1: 778,5 | test 1: 11232,0 | test 1: 2621,9 | 4,3 |
| | test 2: 75,0 | test 2: 794,9 | test 2: 11361,6 | test 2: 2595,0 | |
| | Moy.: 75,0 | Moy.: 787,6 | Moy.: 11296,8 | Moy.: 2608,4 | |

La Figure 12 présente les courbes de fusion (A) et les tracés des dérivées premières (B), correspondant à l'analyse des duplex formés entre les sondes si. 1 1q et sN7q avec l'ADN cible.

### II.2.e. Application particulière : Détection d'ADN cibles par sondes d'hybridation adjacentes exploitant l'effet FRET (cf. Figures 13 et 14)

Le principe de détection d'ADN cibles au moyen d'une paire de sondes d'hybridation adjacentes, par effet FRET (ou transfert d'énergie par résonance de Förster), est résumé de manière très schématique par la Figure 13, qui montre deux exemples de modes de réalisation (A et B). Ces deux modes de réalisation diffèrent uniquement par la position des groupements fluorescents donneurs et accepteurs.

Cette méthode de détection se caractérise par l'emploi simultané de deux sondes nucléiques fluorescentes, chacune marquée d'un groupement fluorescent, un donneur et un accepteur. Ces deux sondes sont conçues pour pouvoir s'hybrider sur un même ADN cible simple brin, et se retrouver suffisamment proche l'une de l'autre pour qu'il puisse s'établir, entre le groupement fluorescent donneur et le groupement fluorescent accepteur, un transfert d'énergie (cette distance est d'environ 1 à 10 nm). Soumis à une énergie de longueur d'onde appropriée, le groupement fluorescent donneur retransfère une partie de l'énergie reçue (sous forme d'une longueur d'onde spécifique) au groupement fluorescent accepteur (un accepteur compatible est une molécule dont le spectre d'absorbance chevauche le spectre d'émission de la molécule donneuse). Excité à son tour, le groupement fluorescent accepteur se met à fluorescer. La fluorescence émise par le groupement fluorescent accepteur est détectée et mesurée ; elle reflète l'hybridation de la paire de sonde à l'ADN cible.

Le mode de réalisation illustré dans la partie (A) de la Figure 13 est relativement classique. Dans ce mode de réalisation, le groupement fluorescent donneur est présent à l'extrémité 3' de la première sonde, et le groupement fluorescent accepteur est couplé à l'extrémité 5' de la seconde sonde. L'extrémité 3' de cette deuxième sonde doit être bloquée par un groupement bloquant pour empêcher l'extension par l'ADN polymérase. Le mode de réalisation de la partie (B) est un mode inversé dans lequel le groupement fluorescent donneur est présent à l'extrémité 5' de la deuxième sonde, et le groupement fluorescent accepteur est couplé à l'extrémité 3' de la première sonde.

Pour la mise en oeuvre de cette méthode de détection d'ADN cible par sondes d'hybridation adjacentes exploitant l'effet FRET, les couples de fluorophores donneur/accepteur sont établis en fonction de la capacité du groupement accepteur à être excité par les longueurs d'ondes émises par le groupement fluorescent donneur, et à émettre une fluorescence d'intensité détectable et significative.

La Figure 14 rend compte des performances de couples de sondes donneuse/acceptrice testés selon les modes de réalisation exemplifiés en Figure 13 (A) et (B), en conservant à chaque fois la même paire d'oligonucléotides (20-mers pour la sonde donneuse et 19-mers pour la sonde acceptrice) et un ADN cible de longueur variable allant de 49 à 64-mers. Une fois les sondes hybridées sur l'ADN cible, les structures de résonance (de la sonde donneuse et de la sonde acceptrice) se trouvent alors à une distance variable allant de 0 base azotée à 15 bases azotées (longueur du segment de l'ADN cible laissé libre entre les deux sondes hybridées).

Selon ces deux modes de réalisation, les couples de sondes donneuse/acceptrice suivants ont été testés (la dénomination adoptée pour chaque sonde rend compte de la structure de résonance reprise, le mode FRET (A) ou (B) appliqué, ainsi que le caractère donneur (d) ou accepteur (a) de la sonde dans le couple considéré) :
- couple A1 : ^{A}s6FAMd / ^{A}sLcRed640a (selon le mode A de la Figure 13)
- couple A2 : ^{A}sI.11d / ^{A}sLcRed640a (selon le mode A de la Figure 13)
- couple B1 : ^{B}s6FAMd / ^{B}sCy5.5a (selon le mode B de la Figure 13)
- couple B2 : ^{B}sI.11d / ^{B}sCy5.5a (selon le mode B de la Figure 13)

Pour les couples A1 et A2, les sondes donneuses, ^{A}sI.11d et ^{A}s6FAMd, ont été préparées en reprenant la structure de résonance du précurseur 1.11 de l'invention et celle du colorant 6FAM (EUROGENTEC, Belgique), pour faire office de groupements fluorescents donneurs. La sonde acceptrice ^{A}sLcRed640a a été préparée en reprenant la structure de résonance du colorant LcRed640^{®} (ROCHE, Suisse), pour faire office de groupement fluorescent accepteur.

Pour les couples B1 et B2, les sondes donneuses, ^{B}sI.11d et ^{B}s6FAMd, ont été préparées en reprenant les mêmes structures de résonance pour faire office de groupements fluorescents donneurs. La sonde acceptrice ^{B}sCy5.5a a été préparée en reprenant la structure de résonance du colorant Cy5.5^{™} (EUROGENTEC, Belgique), pour faire office de groupement fluorescent accepteur.

La préparation de ces différentes sondes, par couplage covalent du précurseur 1.11 ou des colorants 6FAM, LcRed640^{®} et Cy5.5^{™} sur un oligonucléotide, a été menée de manière similaire au protocole décrit précédemment, en référence à la voie de synthèse présentée en Figure 9.

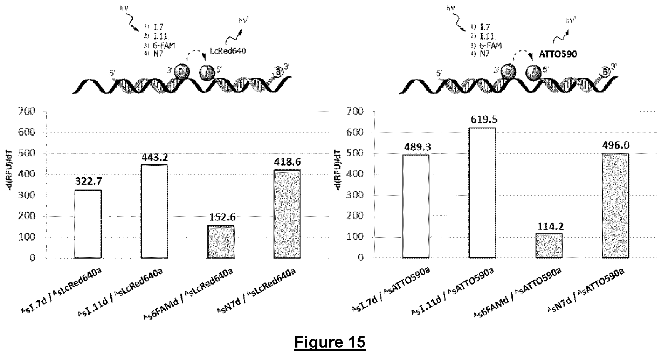

### II.2.f. Evaluation de la capacité FRET de quelques sondes selon l'invention (cf. Figure 15)

Pour évaluer la capacité FRET des colorants I.7 et 1.11 de l'invention, utilisés comme donneurs FRET, une étude comparative a été initiée avec les colorants N7 (US 7,387,887) et 6FAM. A titre d'accepteur FRET, les colorants I.9, I.10, LcRed640^{®} (Roche, Suisse) et ATTO590^{™} (ATTO-Tec GmbH, Allemagne), ont été utilisés. Les sondes donneuses (^{A}sI.7d, ^{A}sI.11d, ^{A}s6FAMd et ^{A}sN7d) et acceptrices (^{A}sLcRed640a et ^{A}sATT0590a) correspondantes ont été préparés avec ces différents colorants, selon un protocole similaire à celui précédemment décrit.

Le design du test est schématisé en Figure 15. Les sondes donneuses sont de 20-mers, les sondes acceptrices sont de 19-mers, et le brin complémentaire est de 51-mers. Une fois les sondes hybridées sur le brin complémentaire, le donneur et l'accepteur se trouvent à une distance de 2-mers.

Selon le principe FRET, la longueur d'onde d'excitation déclenche l'émission fluorescente de la sonde donneuse qui est transférée au fluorophore accepteur sur la sonde acceptrice. Cette sonde émet de la fluorescence en retour. Cette fluorescence a été suivie sur le thermocycleur Gene Up^{®} (bioMérieux, France) pour évaluer l'exaltation de l'émission de fluorescence de la sonde acceptrice à 640 nm. Pour les sondes donneuses (^{A}sI.7d, ^{A}sI.11d, ^{A}s6FAMd et ^{A}sN7d), la longueur d'onde d'excitation a été fixée à 470 nm. Les mesures de fluorescence ont été menées avec une concentration en sonde donneuse de 0,1 µM, une concentration en sonde acceptrice de 0,2 µM et une concentration en brin complémentaire de 0,1 µM.

La Figure 15, sous forme d'histogramme, rend compte de la hauteur du pic de la dérivée première (-d(RFU)/dT) à la Tm en RFU/°C émise par les colorants accepteur (LcRed640^{®} et ATTO590^{™}) sous excitation de chaque colorant donneur testé.

### II.2.f. Exemples de couple de structures de résonance pour la mise en oeuvre d'un système FRET.

Le tableau 6 ci-après propose quelques exemples de couples de structures de résonance pouvant être envisagés pour la préparation de couples de sondes fluorescents destinés à des applications FRET. Les structures de résonance citées dans ce tableau font référence aux composés décrits dans le présent document et dans lesquels se retrouvent les structures de résonance d'intérêt.

**Tableau 6**

| Structures de résonance, pour la préparation de sondes donneuses FRET (λₘₐₓ exc./ λₘₐₓ em.) | | Structures de résonance, pour la préparation de sondes acceptrices FRET (λₘₐₓ exc./ λₘₐₓ em.) | |
|---|---|---|---|
| I.2; I.7 ; sI.7d | (500 nm/516 nm) | LcRed640 ; sLcRed640a | (623 nm/638 nm) |
| I.2; I.7 ; sI.7d | (500 nm/516 nm) | Cy5.5 ; sCy5.5a | (692 nm/711 nm) |
| I.1 ; I.11 ; sI.11d | (500 nm/517 nm) | LcRed640 ; sLcRed640a | (623 nm/638 nm) |
| I.1 ; I.11 ; sI.11d | (500 nm/517 nm) | Cy5.5 ; sCy5.5a | (692 nm/711 nm) |
| N7 ; N7-NHS ; sN7d | (455 nm/477 nm) | 1.5 ; 1.9 | (590 nm/608 nm) |
| N7; N7-NHS ; sN7d | (455 nm/477 nm) | 1.10 | (636 nm/650 nm) |

## Revendications

1. Composés fluorescents ADN/ARN-dépendant de formule (I) : 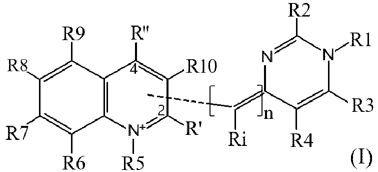 consistant en :
• un noyau pyrimidine lié en résonance à un noyau quinoléine, en position 2 ou 4, via un groupement alcényle ; et
• un bras d'interaction apte à interagir de façon aspécifique avec un acide nucléique ou de façon spécifique avec une séquence nucléotidique donnée ;
et dans laquelle :
- R' ou R" désigne ledit noyau pyrimidine lié audit noyau quinoléine via ledit groupement alcényle ; lorsqu'il ne désigne pas ledit noyau pyrimidine, R' ou R" est choisi parmi ledit bras d'interaction, un atome d'hydrogène, un alkyle en C1-C6, un -S-alkyle en C1-C5, un -O-alkyle en C1-C5, un -NH-alkyle en C1-C5, un -N-(alkyle)₂ en C1-C5, un -C(O)NH-alkyle en C1-C5, un -C(O)O-alkyle en C1-C5, un -C(O)-alkyle en C1-C5 et un -NH-acyle en C1-C4 ;
- n est égal à 1, 2 ou 3 ;
- Ri est un atome d'hydrogène, un alkyle en C1-C6 ou un phényle ;
- R2, R3, R4, R6, R7, R8, R9 et R10 sont indépendamment choisis parmi ledit bras d'interaction, un atome d'hydrogène, un alkyle en C1-C6, un -S-alkyle en C1-C5, un -O-alkyle en C1-C5, un -NH-alkyle en C1-C5, un -N-(alkyle)₂ en C1-C5, un -C(O)-NH-alkyle en C1-C5, un -C(O)O-alkyle en C1-C5, un -C(O)-alkyle en C1-C5 et un -NH-acyle en C1-C4 ; et
- R1 et R5 sont indépendamment choisis entre ledit bras d'interaction, un groupe alkyle en C1-C6, un phényle, -(CH₂)ⱼ-O-alkyle en C1-C3, -(CH₂)ₖ-S-alkyle en C1-C3, -(CH₂)ₖ-C(O)NH-alkyle en C1-C3, un -C(O)O-alkyle en C1-C3 et un -C(O)-alkyle en C1-C3 ; avec j égal à 1, 2, 3 ;
et dans laquelle :
• lorsque R2, R3, R4, R6, R7, R8, R9, R10, R' ou R" désigne un bras d'interaction aspécifique, celui-ci est choisi parmi des chaînes hydrocarbonées protonées ou protonables de formule -A-(CH₂)ₖ₁-B-(CH₂)ₖ₂-(D)ₖ₄-(CH₂)ₖ₃-Y, dans laquelle :
A est choisi parmi -CH₂-, -O-, -S- et -C(O)NH- ;
- B et D sont choisis indépendamment parmi -CH₂-, -O-, -NH-, -N⁺(Me)₂-, -N⁺(Et)₂- et 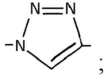
- k1, k2 et k3 sont indépendamment choisis entre 0, 1 et 2 ; k4 est égal à 0 ou 1 ; et
- Y est choisi parmi un trialkylammonium en C1-C5, le guanidinium, l'amidinium, un - NH-alkyle en C1-C5, et un -N-(alkyle)₂ en C1-C5 ; ou
• lorsque R2, R3, R4, R6, R7, R8, R9, R10, R' ou R" désigne le bras d'interaction spécifique à une séquence nucléotidique donnée, celui-ci est choisi parmi des chaînes hydrocarbonées de formule -A-(CH₂)ₖ₁-B'-(CH₂)ₖ₂-(D')ₖ₄-(CH₂)ₖ₃-Y'-Nt, dans laquelle :
- Nt est un oligonucléotide ;
- A est choisi parmi -CH₂-, -O-, -S- et -C(O)NH- ;
- B' et D' sont choisis indépendamment parmi -CH₂-, -O- et 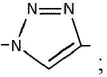
- k1, k2 et k3 sont indépendamment choisis entre 0, 1 et 2 ; k4 est égal à 0 ou 1 ; et
- Y' est une liaison covalente liant ledit oligonucléotide Nt au reste de la chaîne hydrocarbonée ; ou
• lorsque R1 ou R5 désigne un bras d'interaction aspécifique, celui-ci est choisi parmi des chaînes hydrocarbonées protonées ou protonables de formule -(CH₂)ₖ₁-B-(CH₂)ₖ₂-(D)ₖ₄-(CH₂)ₖ₃-Y, dans laquelle :
- B et D sont choisis indépendamment parmi -CH₂-, -O-, -NH-, -N⁺(Me)₂-, -N⁺(Et)₂- et 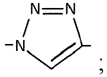
- k1, k2 et k3 sont indépendamment choisis entre 0, 1 et 2 ; k4 est égal à 0 ou 1 ; et
- Y est choisi parmi un trialkylammonium en C1-C5, le guanidinium, l'amidinium, un -NH-alkyle en C1-C5, et un -N-(alkyle)₂ en C1-C5 ; ou
• lorsque R1 ou R5 désigne un bras d'interaction spécifique à une séquence nucléotidique donnée, celui-ci est choisi parmi des chaînes hydrocarbonées de formule -(CH₂)ₖ₁-B'-(CH₂)ₖ₂-(D')ₖ₄-(CH₂)ₖ₃-Y'-Nt, dans laquelle :
- Nt est un oligonucléotide ;
- B' et D' sont choisis indépendamment parmi -CH₂-, -O- et 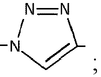
- k1, k2 et k3 sont indépendamment choisis entre 0, 1 et 2 ; k4 est égal à 0 ou 1 ; et
- Y' est une liaison covalente liant ledit oligonucléotide Nt au reste de la chaîne hydrocarbonée.

2. Composé selon la revendication 1, dans lequel R' correspond audit noyau pyrimidine fixé au carbone 2 dudit noyau quinoléine ; ledit composé répond à la formule (Ia) : 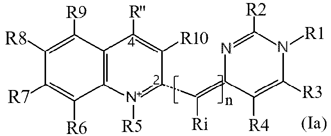 dans laquelle, R1, R2, R3, R4, R5, R6, R7, R8, R9, R10, R", Ri et n sont tels que précédemment définis.

3. Composé selon la revendication 1, dans lequel R" correspond audit noyau pyrimidine fixé au carbone 4 dudit noyau quinoléine ; ledit composé répond à la formule (Ib) : 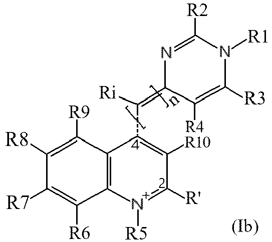 dans laquelle, R1, R2, R3, R4, R5, R6, R7, R8, R9, R10, R', Ri et n sont tels que précédemment définis.

4. Composé selon l'une quelconques des revendications 1 à 3, dans lequel ledit bras d'interaction est un bras d'interaction aspécifique.

5. Composé selon la revendication 4, dans lequel R1 ou R2 désigne ledit bras d'interaction aspécifique, préférentiellement R2.

6. Composé selon l'une quelconque des revendications 1 ou 5, dans lequel ledit bras d'interaction aspécifique est choisi parmi : -(CH₂)₂-₅-Y, -S-(CH₂)₂-₅-Y, -(CH₂)₂-₅-Y, 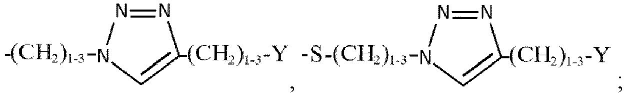 Y étant tel que précédemment défini.

7. Composé selon l'une quelconque des revendications 1 ou 6, dans lequel R2 désigne ledit bras d'interaction aspécifique, et :
- R' ou R" désigne ledit noyau pyrimidine lié audit noyau quinoléine via un groupement alcényle ; lorsqu'il ne désigne pas ledit noyau pyrimidine, R' est un atome d'hydrogène et R" est choisi parmi un atome d'hydrogène et un alkyle en C1-C6 ;
- n est égal à 1 ou 2 ;
- R1 est un phényle ;
- R5 est choisi parmi un phényle et un alkyle en C1-C5 ;
- R7 désigne un atome d'hydrogène ou un -NH-acyle en C1-C4 ; et
- Ri, R3, R4, R6, R8, R9 et R10 sont des atomes d'hydrogène.

8. Composé selon l'une des revendications des revendications 1 ou 6, dans lequel R1 désigne ledit bras d'interaction aspécifique, et :
- R' désigne ledit noyau pyrimidine lié audit noyau quinoléine via un groupement alcényle ;
- n est égal à 1 ou 2 ;
- R5 désigne un alkyle en C1-C5 ;
- Ri, R", R2, R3, R4, R6, R7, R8, R9 et R10 sont des atomes d'hydrogène.

9. Composé selon l'une quelconque des revendications 1 à 3, dans lequel ledit bras d'interaction est un bras d'interaction spécifique.

10. Composé selon la revendication 9, dans lequel R1 ou R2 désigne ledit bras d'interaction spécifique.

11. Composé selon l'une quelconque des revendications 9 ou 10, dans lequel ledit bras d'interaction spécifique est choisi parmi : -(CH₂)₂₋₅-Y'-Nt, -S-(CH₂)₂₋₅-Y'-Nt, -(CH₂)₂₋₅-Y'-Nt, 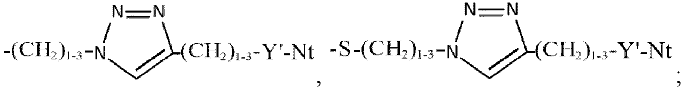 Y' et Nt étant tels que précédemment définis.

12. Composé selon l'une quelconque des revendications 9 à 11, dans lequel Y' est une liaison covalente choisie parmi une liaison carboxamide, une liaison thioéther, une liaison alcane, une liaison oxime, une liaison 1,2,3-triazole et une liaison ester de boronate.

13. Composé selon l'une quelconque des revendications 9 à 12, dans lequel R2 désigne ledit bras d'interaction spécifique, et :
- R' ou R" désigne ledit noyau pyrimidine lié audit noyau quinoléine via un groupement alcényle ; lorsqu'il ne désigne pas ledit noyau pyrimidine, R' est un atome d'hydrogène et R" est choisi parmi un atome d'hydrogène et un alkyle en C1-C6 ;
- n est égal à 1 ou 2 ;
- R1 est un phényle ;
- R5 est choisi parmi un phényle et un alkyle en C1-C5 ; et
- Ri, R3, R4, R6, R7, R8, R9 et R10 sont des atomes d'hydrogène.

14. Composé fluorescent ADN/ARN-dépendant choisi parmi :

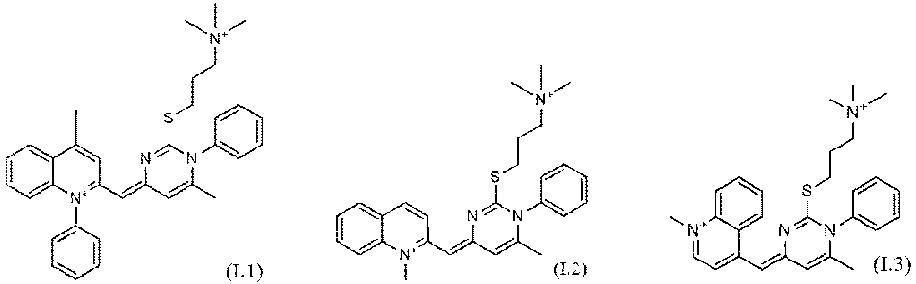

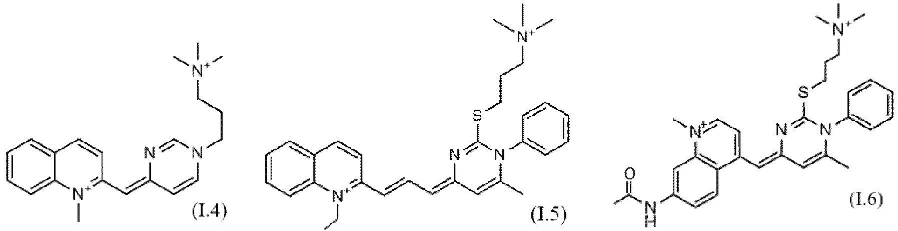

15. Précurseur de synthèse pour la préparation de sondes nucléiques conjuguées, de formule (II) : 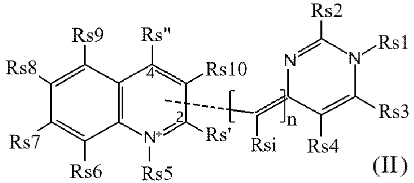 consistant en :
• un noyau pyrimidine lié en résonance à un noyau quinoléine, en position 2 ou 4, via un groupement alcényle ; et
• un bras de couplage, unique, apte à former une liaison covalente avec un oligonucléotide ;
et dans laquelle :
- Rs' ou Rs" désigne ledit noyau pyrimidine lié audit noyau quinoléine via ledit groupement alcényle ; lorsqu'il ne désigne pas ledit noyau pyrimidine, R' ou R" est choisi parmi ledit bras de couplage, un atome d'hydrogène, un alkyle en C1-C6, un -S-alkyle en C1-C5, un -O-alkyle en C1-C5, un -NH-alkyle en C1-C5, un -N-(alkyle)₂ en C1-C5, un
- C(O)NH-alkyle en C1-C5, un -C(O)O-alkyle en C1-C5, un -C(O)-alkyle en C1-C5 et un
- NH-acyle en C1-C4 ;
- n est égal à 1, 2 ou 3 ;
- Rsi est un atome d'hydrogène, un alkyle en C1-C6 ou un phényle ;
- Rs2, Rs3, Rs4, Rs6, Rs7, Rs8, Rs9 et Rs10 sont indépendamment choisis parmi ledit bras de couplage, un atome d'hydrogène, un alkyle en C1-C6, un -S-alkyle en C1-C5, un -O-alkyle en C1-C5, un -NH-alkyle en C1-C5, un -N-(alkyle)₂ en C1-C5, un -C(O)NH-alkyle en C1-C5, un -C(O)O-alkyle en C1-C5, un -C(O)-alkyle en C1-C5 et un -NH-acyle en C1-C4 ; et
- Rs1 et Rs5 sont indépendamment choisis entre ledit bras de couplage, un groupe alkyle en C1-C6, un phényle, -(CH₂)ⱼ-O-alkyle en C1-C3, -(CH₂)ₖ-S-alkyle en C1-C3, -(CH₂)ₖ-C(O)NH-alkyle en C1-C3, un -C(O)O-alkyle en C1-C3 et un -C(O)-alkyle en C1-C3 ; avec j égal à 1, 2, 3 ;
et dans laquelle :
• lorsque Rs2, Rs3, Rs4, Rs6, Rs7, Rs8, Rs9, Rs10, Rs' ou Rs" désigne ledit bras de couplage, celui-ci est choisi parmi des chaînes hydrocarbonées de formule -A-(CH₂)ₖ₁-B'-(CH₂)ₖ₂-(D')ₖ₄-(CH₂)ₖ₃-Y", dans laquelle :
- A est choisi parmi -CH₂-, -O-, -S- et -C(O)NH- ;
- B' et D' sont choisis indépendamment parmi -CH₂-, -O- et 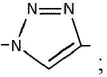
- k1, k2 et k3 sont indépendamment choisis entre 0, 1 et 2 ; k4 est égal à 0 ou 1 ; et
- Y" est un groupement réactif apte à générer une liaison covalente par réaction avec un groupe réactif porté par un oligonucléotide ; ou
• lorsque Rs1 ou Rs5 désigne ledit bras de couplage, celui-ci est choisi parmi des chaînes hydrocarbonées de formule -(CH₂)ₖ₁-B'-(CH₂)ₖ₂-(D')ₖ₄-(CH₂)ₖ₃-Y", dans laquelle :
- B' et D' sont choisis indépendamment parmi -CH₂-, -O- et 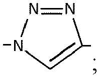
- k1, k2 et k3 sont indépendamment choisis entre 0, 1 et 2 ; k4 est égal à 0 ou 1 ; et
- Y" est un groupement réactif apte à générer une liaison covalente par réaction avec un groupe réactif porté par un oligonucléotide.

16. Précurseur selon la revendication 15, dans lequel Rs' correspond audit noyau pyrimidine fixé au carbone 2 dudit noyau quinoléine ; ledit précurseur répond à la formule (IIa) : 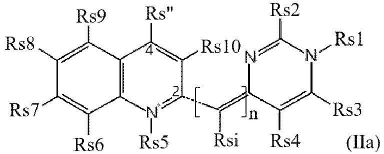 dans laquelle Rs1, Rs2, Rs3, Rs4, Rs5, Rs6, Rs7, Rs8, Rs9, Rs10, Rs", Rsi et n sont tels que précédemment définis.

17. Précurseur selon la revendication 15, dans lequel Rs" correspond audit noyau pyrimidine fixé au carbone 4 dudit noyau quinoléine ; ledit précurseur répond à la formule (IIb) : 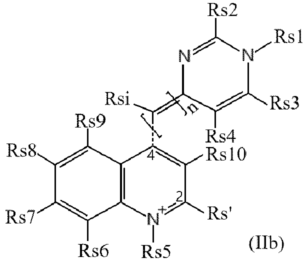 dans laquelle, Rs1, Rs2, Rs3, Rs4, Rs5, Rs6, Rs7, Rs8, Rs9, Rs10, Rs', Rsi et n sont tels que précédemment définis.

18. Précurseur selon l'une quelconque des revendications 15 à 17, dans lequel Rs1 ou Rs2 désigne ledit bras de couplage.

19. Précurseur selon l'une quelconque des revendications 15 à 18, dans lequel ledit bras de couplage est choisi parmi : -(CH₂)₂₋₅-Y", -S-(CH₂)₂₋₅-Y", -(CH₂)₂₋₅-Y", 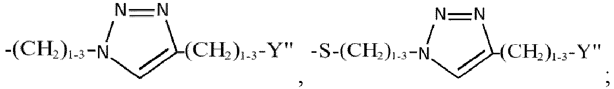 Y" étant tel que précédemment défini.

20. Précurseur selon l'un quelconque de revendications 15 à 19, dans lequel Y" est un groupement réactif choisi parmi : un maléimide, un thiol, un alcène, un diène, un aldéhyde, une cétone, une hydroxylamine, un azide, un alcyle, un boronate et un glycol.

21. Précurseur selon l'une quelconque des revendications 15 à 20, dans lequel Rs2 désigne ledit bras de couplage, et Rs1 désigne un atome d'hydrogène, un méthyle, un éthyle ou un phényle.

22. Précurseur de synthèse pour la préparation de sondes nucléiques conjuguées, choisi parmi :
